# EUROPEAN PATENT APPLICATION

(11) **EP 4 738 940 A1**
(43) Date of publication of application: **06.05.2026**
(21) Application number: 24849540.0
(22) Date of filing: 29.07.2024
(51) Int. Cl.: H04W 52/02, H04W 8/00, H04L 41/0806, H04W 84/12, H04W 4/80

(54) **ELECTRONIC DEVICE FOR PERFORMING LOW POWER WIRELESS COMMUNICATION AND OPERATION METHOD THEREOF**

(30) Priority: 03.08.2023 KR 20230101588; 04.10.2023 KR 20230131721
(71) Applicant: Samsung Electronics Co., Ltd., Suwon-si, Gyeonggi-do 16677 (KR)
(72) Inventor: JUNG, Buseop, Suwon-si, Gyeonggi-do 16677 (KR); KIM, Junsung, Suwon-si, Gyeonggi-do 16677 (KR)
(74) Representative: HGF
(86) International application number: PCT/KR2024/011029
(87) International publication number: WO 2025/028972

(57) **Abstract**

An embodiment of the present invention relates to an apparatus and method for performing low power wireless communication in an electronic device. The electronic device comprises a communication circuit and a processor, wherein the processor may receive NAN communication-related operating state information of an external electronic device while NAN communication is activated, identify whether a condition related to switching to a low power mode is satisfied on the basis of an NAN communication operating state of the external electronic device, identified from the NAN communication-related operating state information of the external electronic device, and perform the low power mode of the NAN communication on the basis of determining that the condition related to switching to the low power mode is satisfied. Other embodiments may also be possible.

## Description

### [Technical Field]

An embodiment of the disclosure relates to an electronic device for performing low-power wireless communication and a method for operating the same.

### [Background Art]

With the development of information and communication technologies and semiconductor technologies, various electronic devices are being used. Such electronic device may provide various types of proximity services by utilizing a low-power discovery technique. A proximity service may refer to a communication function in which adjacent electronic devices in the vicinity exchange data rapidly through a proximity network. For example, the proximity service may include a low-power proximity service using a Bluetooth low energy (BLE) beacon or a low-power proximity service based on a low-power short-range communication technology using a wireless local area network (WLAN) (e.g., a neighbor awareness networking (NAN) and/or Wi-Fi aware) (hereinafter, referred to as "NAN").

The low-power proximity service based on NAN may represent a communication function of configuring a proximity network that dynamically changes according to movement of the electronic device and exchanging data. Electronic devices included in a cluster may notify the presence of the cluster within a time duration (or communication duration) (e.g., a discovery window (DW)) in which the devices are synchronized with each other or perform at least one of transmitting or receiving a signal for discovery (e.g., a synchronization beacon) and a service discovery frame (SDF), in order to synchronize with each other. For example, a cluster may represent a set of electronic devices configuring a proximity network.

The above information is provided as background information to assist with an understanding of the disclosure. None of the above contents is intended to be a prior art related to the disclosure, and no assertion or determination is made as to whether any of the above contents is applicable as prior art related to the disclosure.

### [Disclosure of Invention]

### [Solution to Problem]

NAN-based low-power proximity services may support unsynchronized service discovery (USD) in order to reduce a delay caused by synchronization between electronic devices (e.g., device discovery) when establishing communication between the electronic devices.

In the case of performing USD, the electronic device should continuously maintain an active state of NAN communication for a designated time interval, from the start point of USD, in order to discover an external electronic device, since no synchronization process with the external electronic device precedes the discovery. Even when the electronic device is not a node for performing data communication with an external electronic device, the electronic device should continuously maintain the active state of NAN communication during the designated time interval, which may unnecessarily waste a wireless resource (e.g., a frequency resource and/or a time resource) and power of the electronic device. In case that the electronic device performs NAN communication and wireless LAN communication with an AP concurrently, at least a portion of wireless resources that can be used for the wireless LAN communication with the AP may be unnecessarily used for the NAN communication, so that an unnecessary delay may occur in the wireless LAN communication with the AP.

An embodiment of the disclosure relates to an apparatus and a method for performing low-power wireless communication in an electronic device.

The technical tasks to be achieved in this document are not limited to the above-mentioned technical tasks, and other technical tasks which are not mentioned may be clearly understood from the following description by those skilled in the art to which the disclosure pertains.

According to an embodiment, an electronic device may include a communication circuit configured to support wireless LAN communication, at least one processor operatively connected to the communication circuit, and a memory. According to an embodiment, the memory may store instructions that, when executed individually or collectively by the at least one processor, cause the electronic device to receive operation state information related to neighbor awareness networking (NAN) communication of an external electronic device in a state where the NAN communication is activated. According to an embodiment, the memory may store instructions that, when executed individually or collectively by the at least one processor, cause the electronic device to identify whether a condition related to switching to a low-power mode is satisfied, based on an operation state of the NAN communication of the external electronic device, identified from the operation state information related to the NAN communication of the external electronic device. According to an embodiment, the memory may store instructions that, when executed individually or collectively by the at least one processor, cause the electronic device to perform the NAN communication in the low-power mode, based on determination that the condition related to switching to the low-power mode is satisfied.

According to an embodiment, a method for operating an electronic device may include receiving operation state information related to NAN communication of an external electronic device, in a state where the NAN communication is activated. According to an embodiment, the method for operating the electronic device may include identifying whether a condition related to switching to a low-power mode is satisfied, based on an operation state of the NAN communication of the external electronic device, identified from the operation state information related to the NAN communication of the external electronic device. According to an embodiment, the method for operating the electronic device may include performing the NAN communication in the low-power mode, based on determination that the condition related to switching to a low-power mode is satisfied.

According to an embodiment, a non-transitory computer-readable storage medium (or a computer program product) storing one or more programs may be described. According to an embodiment, the one or more programs may include instructions that, when executed by the processor of the electronic device, perform operations including receiving operation state information related to NAN communication of the external electronic device in a state where the NAN communication is activated, identifying whether a condition related to switching to a low-power mode is satisfied, based on an operation state of the NAN communication of the external electronic device, identified from the operation state information related to the NAN communication of the external electronic device, and performing the NAN communication in the low-power mode, based on determination that the condition related to switching to the low-power mode is satisfied.

According to an embodiment of the disclosure, an electronic device may reduce unnecessary waste of a wireless resource for neighbor awareness networking (NAN) communication with an external electronic device and power of the electronic device by configuring an operation mode (e.g., a low-power mode or an active mode) of the electronic device for NAN communication with the external electronic device, based on an operation state of NAN communication of the external electronic device.

In addition, various effects that may be directly or indirectly identified through the disclosure may be provided.

Advantageous effects obtainable from the embodiments of the disclosure may not be limited to the above-mentioned effects, and other effects which are not mentioned herein may be clearly understood from the following description by those skilled in the art to which the embodiments of the disclosure pertain.

### [Brief Description of Drawings]

With regard to the description of the drawings, the same or similar reference signs may be used to designate the same or similar elements.
FIG. 1 is a block diagram of an electronic device in a network environment according to an embodiment.
FIG. 2 illustrates a NAN cluster according to an embodiment.
FIG. 3 illustrates a protocol for transmitting a signal of an electronic device included in a NAN cluster according to an embodiment.
FIG. 4 illustrates an example of data transmission and/or reception in a NAN cluster according to an embodiment.
FIG. 5 is a block diagram of an electronic device and an external electronic device for NAN communication according to an embodiment.
FIG. 6 is a flowchart illustrating sharing of operation state information of NAN communication in an external electronic device according to an embodiment.
FIG. 7 is a flowchart illustrating configuration of an operation state of NAN communication, based on an NDP configuration, in an external electronic device according to an embodiment.
FIG. 8 is a flowchart illustrating configuration of an operation state of NAN communication, based on a second communication protocol, in an external electronic device according to an embodiment.
FIG. 9 is a flowchart illustrating performance of NAN communication in an electronic device according to an embodiment.
FIG. 10 is a flowchart illustrating activation of NAN communication in an electronic device according to an embodiment.
FIG. 11 is a flowchart illustrating a transition of an operation mode of NAN communication in an electronic device according to an embodiment.
FIG. 12 illustrates an example of configuring a NAN communication mode, based on an NDP configuration, in an electronic device according to an embodiment.
FIG. 13 illustrates an example of configuring a NAN communication mode, based on a second communication protocol, in an electronic device according to an embodiment.

### [Mode for the Invention]

Hereinafter, various embodiments are described in detail with reference to the accompanying drawings.

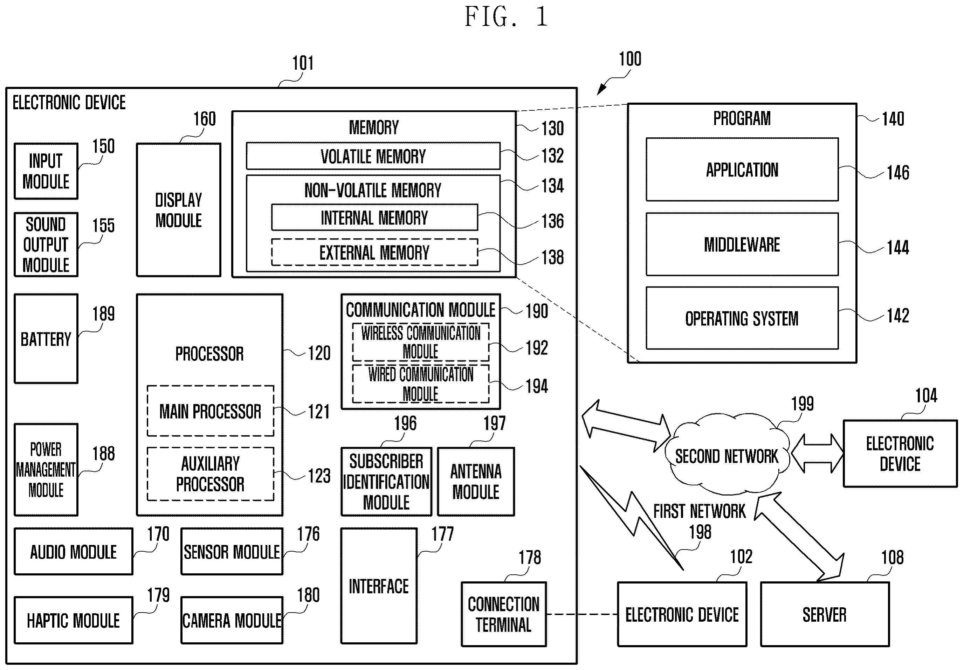

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC. According to an embodiment, the subscriber identification module 196 may include a plurality of subscriber identification modules. For example, the plurality of subscriber identification modules may store different subscriber information.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include patch array antennas and/or dipole array antennas.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

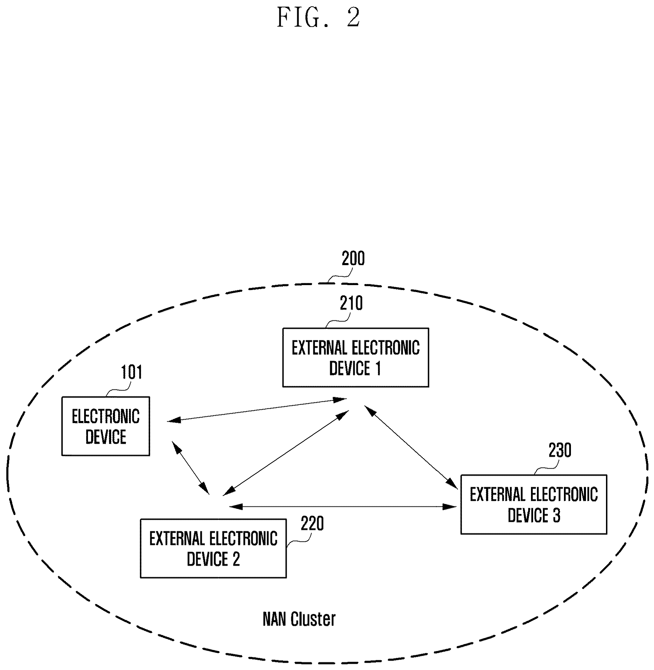

FIG. 2 is a diagram illustrating a neighbor awareness network (NAN) cluster according to various embodiments.

According to various embodiments, FIG. 2 is a diagram illustrating an example of the configuration of a NAN cluster 200 for a proximity network. According to one embodiment, the NAN cluster 200 may mean a set of electronic devices 101, 210, 220, and/or 230 that establish a proximity network so that the respective electronic device (or NAN devices) 101, 210, 220, and/or 230 can transmit and/or receive data to each other.

According to various embodiments, the NAN cluster 200 may include a plurality of electronic devices 101, 210, 220, and/or 230. The electronic devices 101, 210, 220 and/or 230 included in the NAN cluster 200 may transmit and/or receive a beacon (or discovery beacon), a service discovery frame (SDF), and/or a NAN action frame (NAF) within a synchronized time duration (or communication period) (e.g., a discovery window (DW)).

According to various embodiments, the electronic devices 101, 210, 220, and/or 230 within the NAN cluster 200 may have their time clocks synchronized with each other. For example, the electronic devices 101, 210, 220, and/or 230 may be synchronized to the time clock of one electronic device (e.g., the external electronic device 1 210), and transmit and/or receive a beacon, an SDF, and/or an NAF in the synchronized (or same) discovery window.

According to one embodiment, the external electronic device 1 210 supporting a low-power short-range communication technology based on NAN may broadcast a search signal (e.g., a beacon) to discover at least one of the electronic device 101 or another external electronic devices 220, and/or 230 every predetermined first period (e.g., about 100 msec), and perform scanning every predetermined second period (e.g., about 10 msec) to receive the search signal broadcast from at least one of the electronic device 101 or the other external electronic devices 220, and/or 230.

According to one embodiment, the external electronic device 1 210 may detect at least one of the electronic device 101 or the at least one external electronic device 220 and/or 230 located around the external electronic device 1 210 based on the search signal received through scanning, and perform NAN cluster synchronization with the detected at least one of the electronic device 101 or the at least one external electronic device 220 and/or 230. The NAN cluster synchronization may include an operation of receiving time clock information of an electronic device (e.g., the external electronic device 1 210) representing a NAN cluster so that the electronic devices 101, 210, 220 and/or 230 included in the NAN cluster transmit and/or receive data on the same channel and/or during the same time.

According to one embodiment, each of the plurality of electronic devices 101, 210, 220 and/or 230 may form a single NAN cluster 200 that operates according to the synchronized time clock by transmitting a beacon and receiving a beacon from other electronic devices 101, 210, 220 and/or 230. The electronic devices 101, 210, 220 and/or 230 included in the NAN cluster 200 may perform NAN cluster synchronization (e.g., time and/or channel synchronization).

According to various embodiments, NAN cluster synchronization may be performed based on the time and channel of the electronic device (e.g., the external electronic device 1 210) with the highest master preference within the NAN cluster 200. For example, the electronic devices 101, 210, 220, and/or 230 included in the NAN cluster 200 formed through discovery may exchange signals related to master preference information indicating a preference for operating as an anchor master device. The electronic devices 101, 210, 220, and/or 230 included in the NAN cluster 200 may determine the electronic device (e.g., the external electronic device 1 210) with the highest master preference as an anchor master device (or a master electronic device) through the signals related to the master preference information.

According to various embodiments, the anchor master device (e.g., the external electronic device 1 210) may mean an electronic device that serves as a reference for time and channel synchronization of the electronic devices 101, 210, 220, and/or 230 included in the NAN cluster 200. The anchor master device may be changed according to the master preference of the electronic devices 101, 210, 220, and/or 230. Each of the time and channel synchronized electronic devices 101, 210, 220, and/or 230 may transmit a beacon and/or an SDF within a discovery window (or a search period) that is repeated according to a predetermined cycle, and receive the beacon and the SDF from the other electronic devices 101, 210, 220, and/or 230 within the NAN cluster 200. In one embodiment, the beacon may be transmitted and/or received periodically every discovery window to continuously maintain time and channel synchronization of the electronic devices 101, 210, 220, and/or 230 within the NAN cluster 200. The SDF may be transmitted and/or received within the discovery window as needed to provide services to the discovered electronic devices 101, 210, 220, and/or 230. According to one embodiment, among the time and channel synchronized electronic devices 101, 210, 220, and/or 230, the electronic device (e.g., the external electronic device 1 210) operating as the anchor master device may transmit a beacon (e.g., discovery beacon) during the interval between the discovery windows to detect new electronic devices.

According to one embodiment, each of the NAN cluster-synchronized (e.g., time and/or channel-synchronized) electronic devices 101, 210, 220, and/or 230 may transmit a NAN action frame (NAF) and receive NAFs from other electronic devices 101, 210, 220, and/or 230 within the NAN cluster 200 during a discovery window (or search interval) that repeats according to a predetermined cycle. For example, the NAF may include at least one of information related to configuring of a NAN data path (NDP), information related to scheduling update, or information related to NAN ranging to perform data communication in the interval between the discovery windows. For example, the NAF may control scheduling of wireless resources for coexistence of NAN operation and non-NAN operation (e.g., Wi-Fi Direct, mesh, IBSS, WLAN, Bluetooth, or NFC). The NAF may include time and/or channel information available for NAN communication.

According to various embodiments, each of the electronic devices 101, 210, 220, and/or 230 included in the NAN cluster 200 may operate in an active state only during the discovery window, and operate in a low-power state (e.g., a sleep state) during the remaining interval other than the discovery window, thereby reducing current consumption.

According to one embodiment, the discovery window is a period (e.g., in milliseconds) during which the electronic device 101, 210, 220, or 230 enters an active (or wake-up) state, consuming a significant amount of power. However, in the interval other than the discovery window, the electronic device 101, 210, 220, or 230 remains in a sleep state, enabling low-power discovery.

According to various embodiments, the electronic devices 101, 210, 220 and/or 230 included in the NAN cluster 200 may be simultaneously activated at the start time of the synchronized discovery window (e.g., DW start) and simultaneously transition to a sleep state at the end time of the discovery window (e.g., DW end).

According to various embodiments, each of the electronic devices 101, 210, 220, and/or 230 included in the NAN cluster 200 may transmit and/or receive data not only in the discovery window but also in the interval between the discovery windows. According to one embodiment, the electronic devices 101, 210, 220, and/or 230 included in the NAN cluster 200 may perform additional communication by configuring an active time slot in the interval between the discovery windows. For example, electronic devices 101, 210, 220 and/or 230 included in the NAN cluster 200 may transmit and/or receive SDFs that were not transmitted and/or received within the discovery window, through the active time slot. For example, the electronic devices 101, 210, 220 and/or 230 included in the NAN cluster 200 may perform NAN communication and/or non-NAN communication during the active time slot by configuring (or designating) a NAN communication operation period and/or a non-NAN communication operation period during the active time slot.

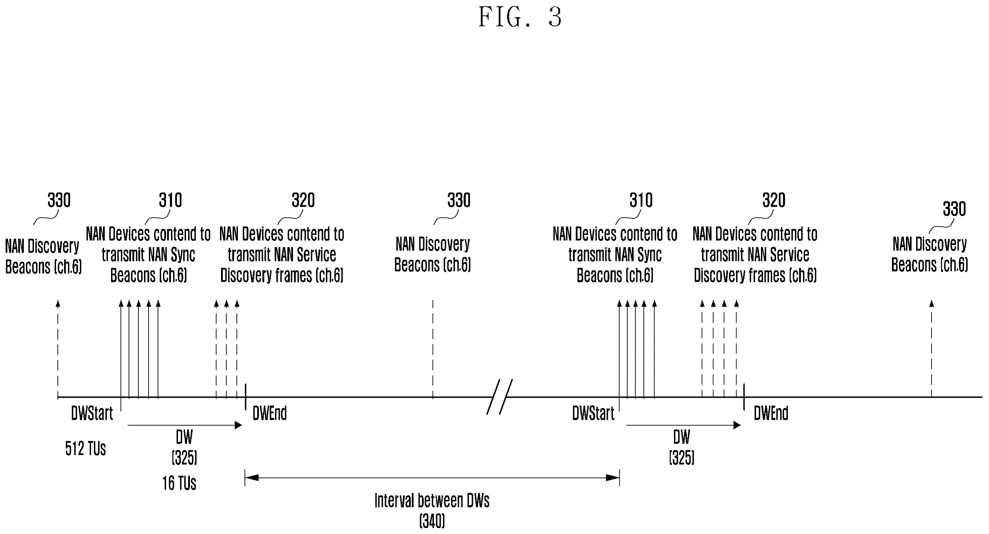

According to various embodiments, the electronic devices 101, 210, 220, and/or 230 included in the NAN cluster 200 may perform discovery, synchronization, and/or data exchange operations using a protocol illustrated in FIG. 3 described below.

FIG. 3 is a diagram illustrating a protocol for transmitting signals of an electronic device included in a NAN cluster according to various embodiments. According to various embodiments, FIG. 3 is a diagram illustrating an example of a discovery window. In FIG. 3, it may be illustrated that electronic devices (e.g., the electronic devices 101, 210, 220, and/or 230 of FIG. 2) included in one NAN cluster (e.g., the NAN cluster 200 of FIG. 2) transmit signals through a specific channel (e.g., channel 6 (Ch6)) based on a NAN standard.

According to various embodiments, the electronic devices 101, 210, 220 and/or 230 included in one NAN cluster (e.g., the NAN cluster 200 of FIG. 2) may transmit a sync beacon 310 and an SDF 320 in a synchronized discovery window 325. A discovery beacon 330 may be transmitted by at least one electronic device 101, 210, 220 and/or 230 in another interval 340 (e.g., an interval between discovery windows) other than the discovery window 325. According to one embodiment, the electronic devices 101, 210, 220 and/or 230 may transmit the sync beacon 310 and the SDF 320 on a contention basis. For example, the sync beacon 310 and the SDF 320 may be transmitted on the contention basis between the respective electronic devices 101, 210, 220 and/or 230 belonging to a NAN cluster (e.g., the NAN cluster 200 of FIG. 2).

According to various embodiments, the electronic devices 101, 210, 220, and/or 230 included in one NAN cluster (e.g., the NAN cluster (200) of FIG. 2) may transmit and/or receive NAFs in the discovery window 325. For example, the NAF may include at least one of information related to configuring of a NAN data path (NDP), information related to scheduling update, or information related to NAN ranging to perform data communication in the interval between the discovery windows.

According to various embodiments, the discovery window 325 may be a period during which the electronic devices 101, 210, 220, and/or 230 is activated from communication idle state (e.g., a sleep state) that is a power-saving mode, to communication state (e.g., a wake-up state) for the purpose of data exchange between the electronic devices 101, 210, 220, and/or 230. For example, the discovery window 325 may be divided into time units (TUs) which are millisecond units. According to one embodiment, the discovery window 325 for transmitting and receiving the sync beacon 310 and the SDF 320 may occupy 16 time units (16 TUs) and may have a cycle (or interval) that repeats with 512 time units (512 TUs).

According to various embodiments, the discovery beacon 330 may represent a signal transmitted so that other electronic devices that have not joined the NAN cluster (e.g., the NAN cluster 200 of FIG. 2) can discover the NAN cluster. For example, the discovery beacon 330 is a signal for notifying the existence of the NAN cluster, and the electronic devices that have not joined the NAN cluster may perform passive scanning to receive the discovery beacon 330, thereby discovering and joining the NAN cluster.

According to various embodiments, the discovery beacon 330 may include information necessary to synchronize with the NAN cluster (e.g., the NAN cluster 200 of FIG. 2). For example, the discovery beacon 330 may include at least one of a frame control (FC) field indicating the function of a signal (e.g., a beacon), a broadcast address, a media access control (MAC) address of a transmission electronic device, a cluster identifier (ID), a sequence control field, a time stamp for a beacon frame, a beacon interval indicating a transmission interval of the discovery beacon 330, or capability information about an electronic device transmitting the discovery beacon 330.

According to various embodiments, the discovery beacon 330 may include at least one proximity network (or NAN cluster) related information element. In one embodiment, the proximity network-related information may be referred to as attribute information.

According to various embodiments, the sync beacon 310 may indicate a signal for maintaining synchronization between the sync electronic devices 101, 210, 220, and/or 230 within the NAN cluster (e.g., the NAN cluster 200 of FIG. 2). The sync beacon 310 may be transmitted by the sync device among the electronic devices 1101, 210, 220, and/or 230 within the NAN cluster. For example, the sync device may include an anchor master device, a master device, or a non-master sync device defined in the NAN standard.

According to various embodiments, the sync beacon 310 may include information necessary for the electronic devices 101, 210, 220, and/or 230 to be synchronized within the NAN cluster (e.g., the NAN cluster 200 of FIG. 2). For example, the sync beacon 310 may include at least one of an FC field indicating the function of a signal (e.g., a beacon), a broadcast address, a MAC address of a transmission electronic device, a cluster ID, a sequence control field, a timestamp for a beacon frame, a beacon interval indicating the interval between the start points of the discovery windows 325, or capability information for a transmission electronic device. According to one embodiment, the sync beacon 310 may include at least one proximity network (or NAN cluster) related information element. For example, the proximity network-related information may include contents for a service provided through the proximity network.

According to various embodiments, the SDF 320 may represent a signal for exchanging data through the proximity network. According to one embodiment, the SDF 320 represents a vendor specific public action frame and may include various fields. For example, the SDF 320 may include a category or action field and include at least one piece of proximity network-related information.

According to various embodiments, the sync beacon 310, the SDF 320, and the discovery beacon 330 may include proximity network-related information. In one embodiment, the proximity network-related information may include an ID indicating a type of information, a length of the information, and a body field that is the corresponding information. According to one embodiment, the corresponding information may include at least one piece of master indication information, cluster information, service ID list information, service descriptor information, connection capability information, wireless LAN infrastructure information, peer to peer (P2P) operation information, independent basic service set (IBSS) information, mesh information, further proximity network service discovery information, further availability map information, country code information, ranging information, cluster discovery information, or vendor specific information.

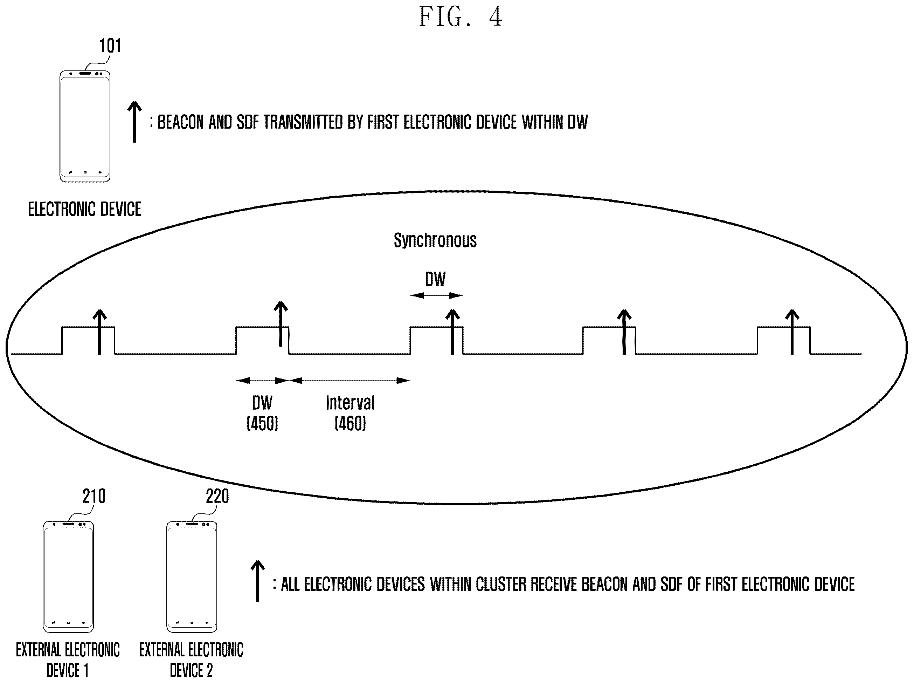

FIG. 4 is a diagram illustrating an example of data transmission and/or reception within a NAN cluster according to various embodiments.

According to various embodiments, FIG. 4 illustrates an example in which an electronic device 101, an external electronic device 1 210, and an external electronic device 2 220 form a single NAN cluster (e.g., the NAN cluster 200 of FIG. 2) through a wireless short-range communication technology, and each of the electronic devices 101, 210, and/or 220 may transmit and/or receive a beacon, an SDF, and/or an NAF to each other. According to one embodiment, FIG. 4 illustrates an example in which the external electronic device 1 210 among the electronic devices 101, 210, and/or 220 forming the NAN cluster performs the role of a master electronic device.

According to various embodiments, the external electronic device 1 210 may transmit a beacon, an SDF, and/or an NAF within a discovery window 450. The external electronic device 1 210 may broadcast the beacon, the SDF, and/or the NAF every discovery window 450 that is repeated every predetermined interval (e.g., interval 460).

According to various embodiments, the electronic device 101 and the external electronic device 2 220 may receive the beacon, the SDF, and/or the NAF transmitted by the external electronic device 1 210. According to one embodiment, each of the electronic device 101 and the external electronic device 2 220 may receive the broadcast beacon, the SDF, and/or the NAF from the external electronic device 1 210 every discovery window 450.

According to various embodiments, the beacon transmitted within the discovery window 450 may include a sync beacon and include information for maintaining synchronization between the electronic devices 101, 210, and/or 220. For example, the electronic device 101 and/or the external electronic device 2 220 may perform NAN cluster synchronization based on time clock information of the external electronic device 1 210 included in the beacon transmitted by the external electronic device 1 210 operating as a master. The electronic device 101 and/or the external electronic device 2 220 may be synchronized based on the time clock information of the external electronic device 1 210, so that the discovery window 450 may be activated at the same time.

According to various embodiments, in an interval other than the discovery window 450 (e.g., interval 460), the electronic devices 101, 210, and/or 220 may maintain communication idle state (e.g., a sleep state) to reduce current consumption. According to one embodiment, the electronic devices 101, 210, and/or 220 may operate in communication state (e.g., a wake state) only in the discovery window 450 based on a synchronized time clock to reduce current consumption.

According to various embodiments, in the interval other than the discovery window 450 (e.g., interval 460), the electronic devices 101, 210 and/or 220 may perform additional communication by configuring an active time slot. According to one embodiment, the electronic devices 101, 210 and/or 220 may transmit and/or receive SDFs that were not transmitted and/or received within the discovery window 450 through the active time slot. According to one embodiment, the electronic devices 101, 210 and/or 220 may perform a connection using legacy Wi-Fi or discovery operation through the active time slot by designating an operation for Wi-Fi Direct, mesh, IBSS, WLAN, Bluetooth or NFC connection in the active time slot.

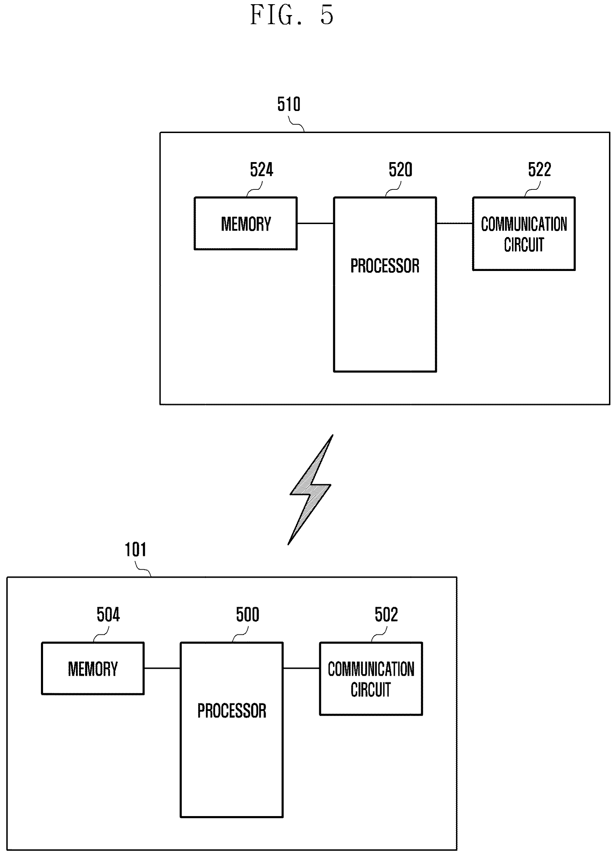

FIG. 5 is a block diagram of an electronic device and an external electronic device for NAN communication according to an embodiment. For example, an electronic device 101 of FIG. 5 may be at least partially similar to the electronic device 101 of FIG. 1, FIG. 2, FIG. 3, or FIG. 4, or may include another embodiment of the electronic device. For example, external electronic device 1 210 of FIG. 5 may be at least partially similar to the external electronic device 1 210 of FIG. 1, FIG. 2, FIG. 3, or FIG. 4, or may include another embodiment of the electronic device.

According to an embodiment referring to FIG. 5, the external electronic device 1 210 may include at least one of a processor (for example, including processing circuitry) 500 (e.g., a first processor), a communication circuit (or communication circuitry) 502 (e.g., a first communication circuit), or a memory 504 (e.g., a first memory). For example, the processor 500 may be substantially the same as the processor 120 of FIG. 1, or may be included in the processor 120. The communication circuit 502 may be substantially the same as, or included in, the wireless communication module 192 of FIG. 1. The memory 504 may be substantially the same as the memory 130 of FIG. 1 or may be included in the memory 130. For example, the processor 500 may include at least one of an application processor or a communication processor. For example, the processor 500 may be operatively, functionally, and/or electrically connected to at least one of the communication circuit 502 and the memory 504. For example, the processor 500 may include at least one processor including a processing circuit.

According to an embodiment, the communication circuit 502 may include various circuit structures used for at least one of modulation or demodulation of a signal in the external electronic device 1 210. For example, the communication circuit 502 may modulate a baseband signal into a radio frequency (RF) band signal and output the same through an antenna (not illustrated), or demodulate (or decode) an RF band signal received through the antenna into a baseband signal and transmit the same to the processor 500. For example, the communication circuit 502 may perform at least one of transmitting or receiving various data to or from other electronic devices (e.g., the electronic device 101 of FIG. 2 or other external electronic devices 220 and/or 230) through a frequency band (e.g., at least one of about 2.4 GHz, about 5 GHz, or about 6 GHz) used for NAN communication.

According to an embodiment, the processor 500 may control the communication circuit 502 to perform NAN communication. For example, the processor 500 may control the communication circuit 502 to activate NAN communication when a NAN activation event is detected. The processor 500 may control the communication circuit 510 to perform NAN synchronization or unsynchronized service discovery (USD) based on the activation of NAN communication. For example, the NAN synchronization or USD may be performed based on information related to NAN communication, transmitted (or broadcast) based on the occurrence (or detection) of a NAN activation event. For example, the NAN activation event may be generated based on at least one of execution of an application program or a function related to NAN communication, reception of a user input (e.g., a touch input or a voice input), reception of a control signal, and detection of a gesture input. For example, the NAN activation event may be generated based on execution of a user interface related to a NAN discovery. For example, the NAN activation event may include an event related to a NAN discovery based on a USD. For example, the information related to NAN communication may be transmitted through a low-power interface-based discovery mode. For example, the low-power interface- based discovery mode may include at least one of an out-of-band (OOB) scheme, a Layer-3 discovery protocol scheme related to a universal plug and play (uPnP) or a multicast domain name system (mDNS), a cloud server request scheme, or a wireless LAN search scheme. For example, the OOB scheme may include a series of operations of transmitting or receiving information related to NAN communication through a second communication scheme different from the first communication scheme based on NAN. For example, the second communication scheme may include at least one of Bluetooth, Bluetooth low energy (BLE), near field communication (NFC), quick response (QR), or a wireless LAN (e.g., Wi-Fi or Wi-Fi direct). For example, the Layer-3 discovery protocol scheme may include a series of operations for transmitting or receiving information related to NAN communication through an access point (AP) to which the electronic device is connected. For example, the cloud server request scheme may include a series of operations in which the electronic device transmits or receives information related to NAN communication through a cloud server to which the electronic device is connected. For example, the wireless LAN discovery scheme may include a series of operations of transmitting or receiving information related to NAN communication through wireless LAN communication of a designated scheme (e.g., Wi-Fi, Wi-Fi direct, or NAN). For example, the information related to NAN communication may include at least one of information related to the external electronic device 1 210, and information related to an application program executed by the external electronic device 1 210. For example, the information related to the external electronic device 1 210 may include at least one of identification information of the external electronic device 1 210 (e.g., a device name), contact information of the external electronic device 1 210, information related to NAN communication of the external electronic device 1 210, or user information. For example, the information related to the application program may include at least one of identification information of the application program or information related to a function or service provided through the application program.

According to an embodiment, the processor 500 may identify an operation state related to NAN communication of the external electronic device 1 210. For example, the processor 500 may configure (or identify) the operation state related to NAN communication of the external electronic device 1 210, based on at least one of the capability of the external electronic device 1 210, a user input, or a service type. For example, the capability of the external electronic device 1 210 may include the number of NAN data paths (for example, NAN data paths (NDPs)) configured for the external electronic device 1 210, or information related to communication (for example, Wi-Fi or Wi-Fi direct) based on the second communication protocol. For example, the second communication protocol is a communication protocol different from the first communication protocol for NAN communication, and may support other wireless LAN communication other than NAN communication, such as Wi-Fi, Wi-Fi direct, or a mobile hotspot. For example, the operation state related to NAN communication may include whether the external electronic device 1 210 is in a state capable of performing an operation based on the NAN communication.

For example, in case that the number of NAN data paths configured for the external electronic device 1 210 is less than a designated reference number (e.g., a maximum value), the processor 500 may configure, as a first state, an operation state related to NAN communication of the external electronic device 1 210. The processor 500 may configure, as a second state, an operation state related to NAN communication of the external electronic device 1 210 when the number of NAN data paths configured for the external electronic device 1 210 is equal to or greater than a designated reference number (e.g., a maximum value). For example, the first state may indicate a state in which the external electronic device 1 210 may perform an additional operation based on NAN communication. For example, the second state may indicate a state in which the external electronic device 1 210 is unable to perform an operation based on NAN communication additionally. For example, the NAN-based operation is NAN communication performed after service discovery between the electronic devices, and may include at least one of NAN-based data communication or distance measurement (e.g., ranging). For example, the designated reference number may include a maximum number supported by the communication circuit 502.

For example, in case that the external electronic device 1 210 is performing wireless LAN communication based on the second communication protocol, the processor 500 may configure an operation state related to NAN communication of the external electronic device 1 210 as a second state. In case that the external electronic device 1 210 does not perform a wireless LAN communication based on a second communication protocol, the processor 500 may configure an operation state related to NAN communication of the external electronic device 1 210 as a first state.

For example, the processor 500 may configure the operation state related to NAN communication of the external electronic device 1 210 as a second state when an application program or a function executed in the external electronic device 1 210 performs an operation related to a low-power mode. The processor 500 may, in case that an application program or a function executed in the external electronic device 1 210 performs an operation not related to the low-power mode, configure an operation state related to NAN communication of the external electronic device 1 210 as a first state. For example, the low-power mode may refer to an operation mode in which at least a part of an operation of at least one internal circuit (e.g., the processor 500) included in the external electronic device 1 210 is restricted in order to reduce power consumption in the external electronic device 1 210.

For example, when an operation related to NAN communication is restricted (or stopped) based on a user input, the processor 500 may configure an operation state related to NAN communication of the external electronic device 1 210 as a second state. When an operation related to NAN communication is performed based on a user input, the processor 500 may configure an operation state related to NAN communication of the external electronic device 1 210 as a first state.

For example, when the external electronic device 1 210, which is performing data communication through the configured NAN data path via a designated first frequency band (e.g., at least one of a 5GHz band or a 6GHz band), requires additional data communication with the electronic device 101 that supports a designated second frequency band (e.g., a 2.4GHz band), the processor 500 may configure an operation state related to NAN communication of the external electronic device 1 210 as a second state. For example, the processor 500 may configure the operation state related to NAN communication of the external electronic device 1 210 as a second state in order to maintain communication quality of data communication in the designated first frequency band.

According to an embodiment, the processor 500 may control the communication circuit 502 to transmit (or broadcast) operation state information related to NAN communication of the external electronic device 1 210. For example, the processor 500 may control the communication circuit 502 to periodically transmit (or broadcast) the operation state information related to NAN communication of the external electronic device 1 210, based on a designated period. For example, in case that the operation state related to NAN communication of the external electronic device 1 210 is changed, the processor 500 may control the communication circuit 502 to transmit (or broadcast) the operation state information related to NAN communication of the external electronic device 1 210. For example, the operation state information related to NAN communication of the external electronic device 1 210 may be transmitted via at least one of an OOB scheme, a Layer-3 discovery protocol scheme related to uPnP or mDNS, a cloud server request scheme, and a wireless LAN frame. For example, the wireless LAN frame may include a frame defined in Wi-Fi, Wi-Fi direct, or NAN communication (e.g., Wi-Fi aware). For example, operation state information related to NAN communication of the external electronic device 1 210 may include at least one of an operation state (e.g., a first state or a second state) related to NAN communication for the external electronic device 1 210 or a reason for a change in the operation state. For example, the operation state related to NAN communication of the external electronic device 1 210 may be included in the form of at least one of a string or a designated value. For example, the operation state information related to NAN communication of the external electronic device 1 210 may be transmitted in the form of a broadcast. For example, operation state information related to NAN communication of the external electronic device 1 210 may be transmitted in a unicast or multicast form, based on a designated address (e.g., address or group address).

According to an embodiment, the processor 500 may control the communication circuit 502 to transmit (or broadcast) information related to termination of a NAN communication for the external electronic device 1 210. For example, when detecting an event related to the termination of NAN communication, the processor 500 may determine that the NAN communication for the external electronic device 1 210 has been terminated. For example, an event related to the termination of a NAN communication may be generated based on the termination of an application program or a function related to NAN communication. For example, the information related to the termination of NAN communication for the external electronic device 1 210 may be transmitted through at least one of an OOB scheme, a Layer-3 discovery protocol scheme related to uPnP or mDNS, a cloud server request scheme, and a wireless LAN frame.

According to an embodiment, the processor 500 may control the communication circuit 502 to transmit a request message related to the configuration of a NAN data path (e.g., NDP) to the electronic device 101 in a state in which NAN communication is activated. For example, when the processor 500 has received an acceptance message related to configuration of a NAN data path (e.g., NDP) from the electronic device 101, the processor 500 may control the communication circuit 502 to configure a NAN data path with the electronic device 101. For example, when the processor 500 receives a rejection message related to the configuration of a NAN data path (e.g., NDP) from the electronic device 101, it may be determined that the electronic device 101 is in a state in which NAN communication is restricted. The processor 500 may output (e.g., display) a state in which NAN communication with the electronic device 101 is restricted, through an output device (not illustrated) (e.g., a display).

According to an embodiment, the memory 504 may store various data used by at least one element (e.g., the processor 500 and/or the communication circuit 502) of the external electronic device 1 210. For example, the memory 504 may store various instructions that are executable through the processor 500 individually or collectively.

According to an embodiment, the electronic device 101 may include at least one of a processor (for example, including processing circuitry) 520 (e.g., a second processor), a communication circuit (or communication circuitry) 522 (e.g., a second communication circuit), or a memory 524 (e.g., a second memory). For example, the processor 520 may be substantially the same as, or may be included in, the processor 120 of FIG. 1. The communication circuit 522 may be substantially the same as the wireless communication module 192 of FIG. 1 or may be included in the wireless communication module 192. The memory 524 may be substantially the same as the memory 130 of FIG. 1, or may be included in the memory 130. For example, the processor 520 may include at least one of an application processor or a communication processor. For example, the processor 520 may be operatively, functionally, and/or electrically connected to at least one of the communication circuit 522 or the memory 524. For example, the processor 520 may include at least one processor including a processing circuit.

According to an embodiment, the communication circuit 522 may include various circuit structures used in at least one of modulation or demodulation of a signal in the electronic device 101. For example, the communication circuit 522 may modulate a baseband signal into a radio frequency (RF) band signal and output the same through an antenna (not illustrated), or demodulate (or decode) an RF band signal received through the antenna into a baseband signal, and transfer the same to the processor 520. For example, the communication circuit 522 may transmit or receive various data to or from external electronic devices (e.g., the external electronic devices 210, 220, and/or 230 of FIG. 2) through a frequency band used for NAN communication (e.g., a 2.4 GHz band, a 5 GHz band, and/or a 6 GHz band).

According to an embodiment, the processor 520 may identify an operation state related to NAN communication of an external electronic device (e.g., the external electronic device 1 210 in FIG. 2, FIG. 3, or FIG. 4). For example, when the information related to NAN communication is received through a low-power interface-based discovery mode, the processor 520 may identify information related to an application program of the external electronic device 1 210. For example, the low-power interface-based discovery mode may include at least one of an out-of-band (OOB) scheme, a Layer-3 discovery protocol scheme related to a universal plug and play (uPnP) or a multicast domain name system (mDNS), a cloud server request scheme, or a wireless LAN search scheme. For example, information related to the application program may include at least one of identification information of the application program executed by the external electronic device and information related to a function or service provided through the application program.

For example, when it is determined, based on information related to an application program of the external electronic device 1 210, that NAN communication with the external electronic device 1 210 can be supported, the processor 520 may identify operation state information of the external electronic device 1 210. For example, the operation state information related to NAN communication of the external electronic device 1 210 may include the most recently received operation state information related to NAN communication of the external electronic device 1 210, based on a time when it is determined that NAN communication with the external electronic device 1 210 can be supported. For example, the operation state information related to NAN communication of the external electronic device 1 210 may include the operation state information related to NAN communication of the external electronic device 1 210 received after a time when it is determined that NAN communication with the external electronic device 1 210 can be supported. For example, the operation state information related to NAN communication of the external electronic device 1 210 may be periodically or aperiodically received through at least one of an OOB scheme, a Layer-3 discovery protocol scheme related to uPnP or mDNS, a cloud server request scheme, or a wireless LAN frame.

For example, NAN communication for the electronic device 101 may be activated, based on reception of information related to NAN communication through a low-power interface-based discovery mode. For example, the NAN communication for the electronic device 101 may be activated, based on a determination that the NAN communication with the external electronic device 1 210 is supportable based on information related to an application program of the external electronic device 1 210. For example, the NAN communication for the electronic device 101 may support the NAN communication with the external electronic device 1 210, based on information related to an application program of the external electronic device 1 210, and may be activated, based on that an operation state related to NAN communication of the external electronic device 1 210 is a first state.

According to an embodiment, the processor 520 may configure an operation mode related to NAN communication of the electronic device 101, based on an operation state related to NAN communication of the external electronic device 1 210. For example, in case that the operation state related to NAN communication of the external electronic device 1 210 is a first state, the processor 520 may configure the operation mode of NAN communication for the electronic device 101 as a first mode (or an active mode). For example, in case that the operation state related to NAN communication of the external electronic device 1 210 is a second state, the processor 520 may configure the operation mode of NAN communication for the electronic device 101 as a second mode (or low-power mode). For example, an operation mode related to NAN communication may be an operation mode used by the electronic device 101 to perform NAN communication, and may include an active mode (e.g., a first mode) and a low-power mode (e.g., a second mode). For example, the active mode (e.g., the first mode) is an operation mode in which the electronic device 101 performs NAN communication without a separate limitation, and may be referred to as a normal mode. For example, the low-power mode (e.g., the second mode) is an operation mode in which at least a part of NAN communication for the electronic device 101 is restricted, and may include an operation mode in which an active period for the NAN communication is configured or the NAN communication is deactivated. For example, the low-power mode (e.g., the second mode) may include an operation mode in which only an operation in a discovery window is maintained and other operations are deactivated. For example, the operation in a discovery window may include an operation (e.g., synchronization) of transmitting or receiving a beacon, SDF, or NAF during a discovery window (DW). For example, a discovery window interval may be relatively expanded in the low-power mode. For example, the other operation may include at least one of USD, NAN communication-based data communication, or distance measurement (e.g., ranging).

According to an embodiment, when the operation mode related to NAN communication for the electronic device 101 is configured as the first mode (e.g., the active mode), the processor 520 may control the communication circuit 522 to perform NAN communication. For example, the processor 520 may control the communication circuit 522 to perform NAN synchronization or USD. In case that an external electronic device (e.g., the external electronic device 1 210) for NAN communication is detected, the processor 520 may control the communication circuit 522 to perform an operation (e.g., data communication or distance measurement) related to NAN communication with the external electronic device (e.g., the external electronic device 1 210). For example, the processor 520 may configure (or generate) a NAN data path (NDP) with an external electronic device (e.g., the external electronic device 1 210). The processor 520 may control the communication circuit 522 to perform data communication through a NAN data path with an external electronic device (e.g., the external electronic device 1 210).

According to an embodiment, when the operation mode related to NAN communication for the electronic device 101 is configured as the second mode (e.g., a low-power mode), the processor 520 may control the communication circuit 522 to operate in a low-power mode related to NAN communication. For example, when an operation mode related to NAN communication of the electronic device 101 is configured as a second mode (e.g., a low-power mode), the processor 520 may control the communication circuit 522 to deactivate NAN communication. For example, when the operation mode related to NAN communication of the electronic device 101 is configured as the second mode (e.g., a low-power mode), the processor 520 may control the communication circuit 522 to reduce an active interval (e.g., an active time slot) configured in the first mode (e.g., an active mode) to a designated size (or a designated ratio). The processor 520 may control the communication circuit 522 to be activated in the reduced active interval and to transmit and/or receive data. For example, in case that an operation mode related to NAN communication of the electronic device 101 during USD is configured as a second mode (e.g., a low-power mode), the processor 520 may control the communication circuit 522 to terminate the USD. The processor 520 may maintain only the operation in the discovery window, and deactivate other operations, based on the termination of the USD. For example, the operation in a discovery window may include an operation (e.g., synchronization) of transmitting or receiving a beacon, SDF, or NAF in a discovery window (DW). For example, a discovery window interval may be relatively expanded in a low-power mode. For example, the other operations may include at least one of USD, NAN communication-based data communication, or distance measurement (e.g., ranging).

According to an embodiment, the processor 520 may reconfigure an operation mode related to NAN communication of the electronic device 101. For example, when it is identified that a change in an operation state related to NAN communication of the external electronic device (e.g., the external electronic device 1 210 in FIG. 2, FIG. 3, or FIG. 4) occurs, the processor 520 may reconfigure the operation mode related to NAN communication of the electronic device 101, based on the operation state related to NAN communication of the external electronic device.

According to an embodiment, the processor 520 may control the communication circuit 522 to terminate (or deactivate) the NAN communication. For example, when the processor 520 has acquired information related to termination of NAN communication with the external electronic device 1 210 during the NAN communication, the processor 520 may control the communication circuit 522 to terminate (or deactivate) the NAN communication. For example, the termination of NAN communication may be performed after a designated time has elapsed from the time when the information related to the termination of NAN communication has been acquired. For example, information related to the termination of NAN communication may be received through at least one of an OOB scheme, a Layer-3 discovery protocol scheme related to uPnP or mDNS, a cloud server request scheme, or a wireless LAN frame.

According to an embodiment, when a request message related to configuration of a NAN data path (e.g., NDP) is received from an external electronic device (e.g., the external electronic device 1 210) while the NAN communication is in an activated state, the processor 520 may identify an operation state of the electronic device 101 related to NAN communication. For example, the processor 520 may configure (or identify) an operation state of the electronic device 101 related to NAN communication, based on at least one of a capability of the electronic device 101, a user input, or a service type. For example, the capability of the electronic device 101 may include information related to the number of NAN data paths (e.g., NDPs) configured for the electronic device 101 or a communication based on a second communication protocol (e.g., Wi-Fi or Wi-Fi direct). For example, the operation state related to NAN communication may include whether the electronic device 101 is in a state capable of performing an operation based on NAN communication.

For example, when the number of NAN data paths configured for the electronic device 101 is less than a designated reference number (e.g., a maximum value), the processor 520 may configure the operation state of the electronic device 101 related to NAN communication as a first state. The processor 520 may configure the operation state of the electronic device 101 related to NAN communication as a second state when the number of NAN data paths configured for the electronic device 101 is equal to or larger than a designated reference number (e.g., a maximum value). For example, the first state may indicate a state in which the electronic device 101 is able to additionally perform an operation based on NAN communication. For example, the second state may indicate a state in which the electronic device 101 is unable to perform an operation based on NAN communication additionally.

For example, the processor 520 may configure an operation state of the electronic device 101 related to NAN communication as a second state in case that the electronic device 101 is performing a wireless LAN communication based on the second communication protocol. In case that the electronic device 101 does not perform a wireless LAN communication based on the second communication protocol, the processor 520 may configure an operation state of the electronic device 101 related to NAN communication as a first state.

For example, when the application program or function executed in the electronic device 101 performs an operation related to a low-power mode, the processor 520 may configure an operation state of the electronic device 101 related to NAN communication as a second state. The processor 520 may configure the operation state of the electronic device 101 related to NAN communication as a first state when an application program or function executed in the electronic device 101 performs an operation not related to a low-power mode. For example, the low-power mode may refer to an operation mode in which, in order to reduce power consumption in the electronic device 101, operations of at least one internal circuit (e.g., the processor 520) included in the electronic device 101 are at least partially limited.

For example, the processor 520 may configure an operation state of the electronic device 101 related to NAN communication as a second state when an operation related to NAN communication is restricted (or stopped) based on a user input. When the processor 520 performs an operation related to NAN communication, based on a user input, the processor 520 may configure the operation state of the electronic device 101 related to NAN communication as a first state.

For example, in case that the processor 520 may configure an operation state of the electronic device 101 related to NAN communication as a second state when, during data communication through a NAN data path established through a designated first frequency band (e.g., at least one of approximately 5 GHz or approximately 6 GHz), an external electronic device (e.g., the external electronic device 1 210) requests additional data communication based on a designated second frequency band (e.g., approximately 2.4 GHz). For example, the processor 520 may configure the operation state of the electronic device 101 related to NAN communication as a second state in order to maintain communication quality of the data communication in the designated first frequency band.

According to an embodiment, in case that the operation state of the electronic device 101 related to NAN communication is a first state, the processor 500 may control the communication circuit 522 to configure a NAN data path with an external electronic device (e.g., the external electronic device 1 210). For example, in case that the operation state of the electronic device 101 related to NAN communication is a first state, the processor 520 may control the communication circuit 522 to transmit an acceptance message related to a configuration of a NAN data path (e.g., NDP).

According to an embodiment, when the operation state of the electronic device 101 related to NAN communication is the second state, the processor 520 may control the communication circuit 522 to transmit a rejection message related to the configuration of a NAN data path (e.g., NDP). For example, a rejection message related to the configuration of a NAN data path (e.g., an NDP) may include at least one of a reason for rejecting the configuration of the NAN data path or operation state information of the electronic device 101 related to NAN communication.

According to an embodiment, the memory 524 may store various data used by at least one element of the electronic device 101 (e.g., at least one of the processor 520 or the communication circuit 522). For example, the memory 524 may store various instructions that are executable through the processor 520 individually or collectively.

According to an embodiment, an electronic device (e.g., the electronic device 101 in FIG. 1, FIG. 2, FIG. 3, FIG. 4, or FIG. 5) may include a communication circuit (e.g., the wireless communication module 192 in FIG. 1 or the communication circuit 522 in FIG. 5) supporting a wireless local area network (LAN) communication, at least one processor (e.g., the processor 120 in FIG. 1 or the processor 520 in FIG. 5) operatively connected to the communication circuit, and a memory (e.g., the memory 130 in FIG. 1 or the memory 524 in FIG. 5) operatively connected to the at least one processor. According to an embodiment, the memory may store instructions that, when executed by the at least one processor individually or collectively, cause the electronic device to receive operation state information related to neighbor awareness networking (NAN) communication of an external electronic device (e.g., the external electronic device 1 210 in FIG. 2, FIG. 3, FIG. 4, or FIG. 5) while NAN communication is in an active state. According to an embodiment, the memory may store instructions that, when executed by the at least one processor individually or collectively, cause the electronic device to identify whether a condition related to a transition to a low-power mode is satisfied, based on an operation state of NAN communication of the external electronic device, identified from the operation state information related to NAN communication of the external electronic device. According to an embodiment, the memory may store instructions that, when executed by the at least one processor individually or collectively, cause the electronic device to perform NAN communication in the low-power mode, based on a determination that the condition related to transition to a low-power mode is satisfied.

According to an embodiment, the memory may store instructions that, when executed by the at least one processor individually or collectively, cause the electronic device to activate NAN communication, based on reception of information related to NAN communication via at least one of an out of band (OOB) scheme, a Layer-3 discovery protocol scheme related to a universal plug and play (uPnP) or a multicast domain name system (mDNS), a cloud server request scheme, or a wireless LAN frame.

According to an embodiment, the instructions may include instructions that, when executed by the at least one processor individually or collectively, cause the electronic device to receive operation state information related to NAN communication of an external electronic device via at least one of an OOB scheme, a Layer-3 discovery protocol scheme related to uPnP or mDNS, a cloud server request scheme, or a wireless LAN frame.

According to an embodiment, the instructions may include instructions that, when executed by the at least one processor individually or collectively, cause the electronic device to activate an unsynchronized service discovery (USD) based on activation of NAN communication. According to an embodiment, the instructions may include instructions that, when executed by the at least one processor individually or collectively, cause the electronic device to terminate a USD in a state in which NAN communication is activated, based on a determination that a condition related to a transition to a low-power mode is satisfied.

According to an embodiment, the memory may store instructions that, when executed individually or collectively by the at least one processor, cause the electronic device to expand a period of a discovery window of NAN communication to a period having a designated size, based on the termination of the USD.

According to an embodiment, the memory may store instructions that, when executed individually or collectively by the at least one processor, cause the electronic device to identify an operation state of NAN communication for an external electronic device in a state in which the electronic device has been transitioned to a low-power mode. According to an embodiment, the memory may store instructions that, when executed individually or collectively by the at least one processor, cause the electronic device to identify whether a condition related to a transition to an active mode is satisfied, based on an operation state of NAN communication of the external electronic device. According to an embodiment, the memory may store instructions that, when executed by the at least one processor individually or collectively, cause the electronic device to transition NAN communication to an active mode, based on a determination that the condition related to transition to the active mode are satisfied.

According to an embodiment, the instructions may include instructions that, when executed individually or collectively by the at least one processor, cause the electronic device to activate an unsynchronized service discovery (USD) based on a determination that the condition related to the transition to the active mode is satisfied.

According to an embodiment, the memory may store instructions that, when executed individually or collectively by the at least one processor, cause the electronic device to establish a NAN data link with the external electronic device in case that the NAN communication is transitioned to the active mode. According to an embodiment, the memory may store instructions that, when executed individually or collectively by the at least one processor, cause the electronic device to perform at least one of transmitting or receiving at least one of a signal or data to or from the external electronic device through the NAN data link.

According to an embodiment, the instructions may include instructions that, when executed individually or collectively by the at least one processor, cause the electronic device to, in case that the electronic device 101 is determined as being capable of performing NAN communication with the external electronic device, determine that the condition related to transition to a low-power mode is not satisfied based on an operation state of NAN communication of the external electronic device. According to an embodiment, the instructions may include instructions that, when executed individually or collectively by the at least one processor, cause the electronic device to, in case that the electronic device 101 is determined as having restricted NAN communication with the external electronic device, determine that the condition related to transition to a low-power mode is satisfied based on an operation state of NAN communication of the external electronic device.

According to an embodiment, the memory may store instructions that, when executed individually or collectively by the at least one processor, cause the electronic device to terminate NAN communication in case that information related to the termination of NAN communication is received.

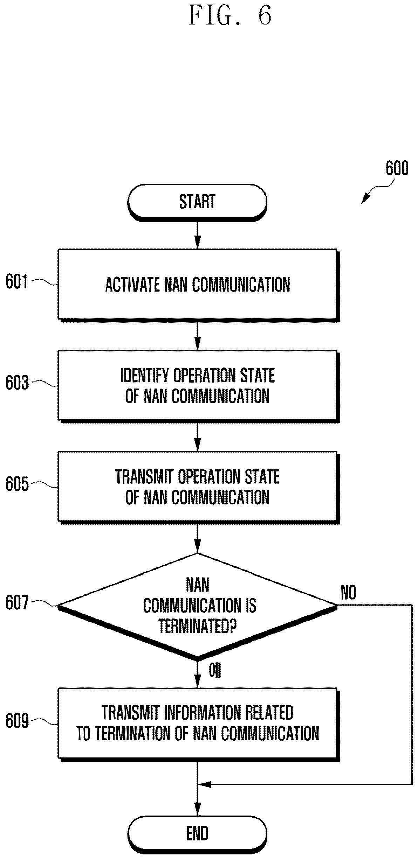

FIG. 6 is a flowchart 600 illustrating sharing of operation state information of NAN communication in an external electronic device according to an embodiment. Each of the operations in the following embodiments may be performed sequentially, but is not necessarily performed sequentially. For example, the order of each operation may be changed, and at least two operations may be performed in parallel. For example, the external electronic device of FIG. 6 may be the electronic device 101 of FIG. 1 or the external electronic device 1 210 of FIG. 2, FIG. 3, FIG. 4, or FIG. 5.

According to an embodiment in conjunction with FIG. 6, the external electronic device (e.g., the external electronic device 1 210) or the processor (e.g., the processor 120 of FIG. 1 or the processor 500 of FIG. 5) may activate NAN communication in operation 601. For example, the processor 500 may control a communication circuit 502 to activate NAN communication when a NAN activation event is detected. For example, the NAN activation event may be generated based on at least one of execution of an application program or a function related to NAN communication, reception of a user input (e.g., a touch input or a voice input), reception of a control signal, or detection of a gesture input. For example, the NAN activation event may be generated based on execution of a user interface related to a NAN discovery. For example, the NAN activation event may include an event related to NAN discovery based on a USD. For example, in case that the NAN activation event is detected, the processor 500 may control the communication circuit 502 to transmit (or broadcast) information related to NAN communication. The processor 500 may control the communication circuit 502 to activate the NAN communication, based on transmission of information related to NAN communication. For example, information related to NAN communication may be transmitted through a low-power interface-based discovery mode. For example, the low-power interface-based discovery mode may include at least one of an out of band (OOB) scheme, a Layer-3 discovery protocol scheme related to a universal plug and play (uPnP) or a multicast domain name system (mDNS), a cloud server request scheme, or a wireless LAN search scheme.

For example, the processor 500 may, based on activation of NAN communication, search for an electronic device (e.g., the electronic device 101 or the external electronic device 220, 230, or 240) for NAN communication. For example, discovery of the electronic device for NAN communication may be performed, based on a response message (e.g., a BLE advertisement) of a low-power interface-based discovery mode. For example, search for an electronic device for NAN communication may be performed based on a NAN synchronization procedure and a cluster configuration. For example, the search for the electronic device for NAN communication may be performed, based on a USD.

For example, the processor 500 may control the communication circuit 502 to perform an operation based on NAN communication. For example, the operation related to NAN communication may include at least one of USD, NAN communication-based data communication, or distance measurement (e.g., ranging).

According to an embodiment, an external electronic device (e.g., the external electronic device 1 210) or a processor (e.g., the processor 120 or 500) may identify an operation state related to NAN communication of the external electronic device in operation 603. For example, the processor 500 may configure (or identify) the operation state related to NAN communication of the external electronic device 1 210, based on at least one of a capability of the external electronic device 1 210, a user input, or a service type. For example, the capability of the external electronic device 1 210 may include information on the number of NAN data paths (e.g., NDPs) configured for the external electronic device 1 210 or information related to communication (e.g., Wi-Fi or Wi-Fi direct) based on a second communication protocol. For example, the second communication protocol may be a communication protocol different from a first communication protocol for NAN communication, and may support other wireless LAN communication other than NAN communication, such as Wi-Fi, Wi-Fi direct, or a mobile hotspot. For example, the operation state related to NAN communication may include whether the external electronic device 1 210 is in a state in which a NAN communication-based operation can be performed.

For example, in the case that the number of NAN data paths configured for the external electronic device 1 210 is less than a designated reference number (e.g., a maximum value), the processor 500 may configure the operation state related to NAN communication of the external electronic device 1 210 as a first state. The processor 500 may, in case that the number of NAN data paths configured for the external electronic device 1 210 is equal to or greater than a designated reference number (e.g., a maximum value), configure an operation state related to NAN communication of the external electronic device 1 210 as a second state. For example, the first state may indicate a state in which the external electronic device 1 210 is able to additionally perform an operation based on NAN communication. For example, the second state may indicate a state in which the external electronic device 1 210 is unable to perform a NAN communication-based operation. For example, the NAN communication-based operation may be NAN communication performed after a service discovery between electronic devices, and may include at least one of NAN communication-based data communication or distance measurement (e.g., ranging). For example, the designated reference number may include a maximum number supported by the communication circuit 502.

For example, the processor 500 may, in case that the external electronic device 1 210 is performing wireless LAN communication based on the second communication protocol, configure the operation state related to NAN communication of the external electronic device 1 210 as a second state. The processor 500 may configure the operation state related to NAN communication of the external electronic device 1 210 as a first state, in case that the external electronic device 1 210 does not perform wireless LAN communication based on the second communication protocol.

For example, when an application program or a function executed in the external electronic device 1 210 performs an operation related to a low-power mode, the processor 500 may configure the operation state related to NAN communication of the external electronic device 1 210 as a second state. The processor 500 may configure the operation state related to NAN communication of the external electronic device 1 210 as a first state, in case that an application program or function executed in the external electronic device 1 210 performs an operation not related to the low-power mode. For example, the low-power mode may be an operation mode that at least partially limits operation of at least one internal circuit (e.g., the processor 500) included in the external electronic device 1 210 in order to reduce power consumption in the external electronic device 1 210.

For example, the processor 500 may configure the operation state related to NAN communication of the external electronic device 1 210 as a second state when the operation related to NAN communication is restricted (or stopped) based on a user input. In case that an operation related to NAN communication is performed based on a user input, the processor 500 may configure the operation state related to NAN communication of the external electronic device 1 210 as a first state.

For example, when the external electronic device 1 210, which is performing data communication through the configured NAN data path via a designated first frequency band (e.g., at least one of a 5GHz band or a 6GHz band), requires additional data communication with the electronic device 101 that supports a designated second frequency band (e.g., a 2.4GHz band), the processor 500 may configure an operation state related to NAN communication of the external electronic device 1 210 as a second state.

According to an embodiment, an external electronic device (e.g., the external electronic device 1 210) or a processor (e.g., the processor 120 or 500) may transmit (or broadcast) the operation state information related to NAN communication of the external electronic device in operation 605. For example, the processor 500 may control the communication circuit 502 to transmit (or broadcast) the operation state information related to NAN communication of the external electronic device 1 210 periodically, based on a designated period. For example, when the operation state related to NAN communication of the external electronic device 1 210 is changed, the processor 500 may control the communication circuit 502 to transmit (or broadcast) the operation state information related to NAN communication of the external electronic device 1 210. For example, the operation state related to NAN communication of the external electronic device 1 210 may be transmitted through at least one of an OOB scheme, a Layer-3 discovery protocol scheme related to uPnP or mDNS, a cloud server request scheme, or a wireless LAN frame. For example, the operation state information related to NAN communication of the external electronic device 1 210 may include at least one of the operation state (e.g., first state or second state) related to NAN communication of the external electronic device 1 210, or the reason for the change of the operation state. For example, the operation state related to NAN communication of the external electronic device 1 210 may be included in the form of at least one of a string or a designated value. For example, the operation state information related to NAN communication of the external electronic device 1 210 may be transmitted in a broadcast form. For example, the operation state information related to NAN communication of the external electronic device 1 210 may be transmitted in a unicast or multicast form, based on a designated address (e.g., address or group address).

According to an embodiment, the external electronic device (e.g., the external electronic device 1 210) or the processor (e.g., the processor 120 or 500) may identify whether NAN communication is terminated in operation 607. For example, when an event related to the termination of NAN communication is detected, the processor 500 may determine that the NAN communication for the external electronic device 1 210 has been terminated. For example, an event related to the termination of NAN communication may occur based on the termination of an application program or a function related to NAN communication.

According to an embodiment, in case that the NAN communication is not terminated (e.g., "No" in operation 607), the external electronic device (e.g., the external electronic device 1 210) or the processor (e.g., the processor 120 or 500) may terminate the process for sharing operation state information of NAN communication in the embodiment. For example, in case that an event related to the termination of NAN communication is not detected, the processor 500 may control the communication circuit 502 to perform the NAN communication. In case that NAN communication is performed, the processor 500 may control the communication circuit 502 to periodically or aperiodically transmit operation state information related to NAN communication of the external electronic device 1 210. For example, aperiodic transmission of the operation state information related to NAN communication of the external electronic device 1 210 may include a series of operations in which the operation state information related to NAN communication of the external electronic device 1 210 is transmitted based on a change in an operation state related to NAN communication of the external electronic device 1 210.

According to an embodiment, in case that the NAN communication is terminated (e.g., "Yes" in operation 607), the external electronic device (e.g., the external electronic device 1 210) or the processor (e.g., the processor 120 or 500) may transmit information related to the termination of NAN communication in operation 609. For example, the NAN communication for the external electronic device 1 210 may be terminated based on transmission of information related to the termination of NAN communication. For example, information related to the termination of NAN communication for the external electronic device 1 210 may be transmitted through at least one of an OOB scheme, a Layer-3 discovery protocol scheme related to uPnP or mDNS, a cloud server request scheme, or a wireless LAN frame.

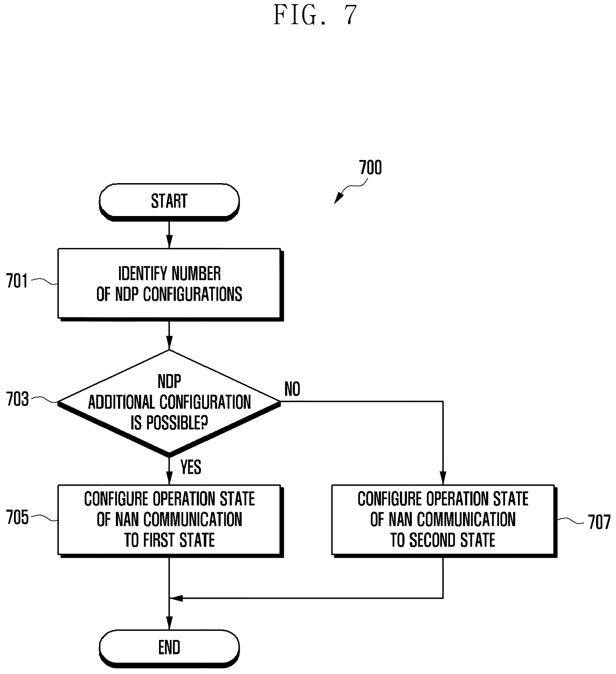

FIG. 7 is a flowchart 700 illustrating configuration of an operation state of NAN communication, based on an NDP configuration, in an external electronic device according to an embodiment. According to an embodiment, at least a part of FIG. 7 may include a detailed operation of operation 603 of FIG. 6. In the following embodiment, each of the operations may be performed sequentially, but it is not necessarily performed sequentially. For example, the order of each of the operations may be changed, and at least two of the operations may be performed in parallel. For example, the external electronic device of FIG. 7 may be the electronic device 101 of FIG. 1 or the external electronic device 1 210 of FIG. 2, FIG. 3, FIG. 4, or FIG. 5.

Referring to an embodiment of FIG. 7, in case that NAN communication is activated (e.g., operation 601 of FIG. 6), an external electronic device (e.g., the external electronic device 1 210) or a processor (e.g., the processor 120 of FIG. 1 or the processor 500 of FIG. 5) may identify the number of NDP configurations of the external electronic device in operation 701. For example, the number of NDP configurations may indicate the number of NDPs configured for the external electronic device.

According to an embodiment, in operation 703, the external electronic device (e.g., the external electronic device 1 210) or the processor (e.g., the processor 120 or 500) may identify whether an NDP may be additionally configured for the external electronic device, based on the number of NDP configurations of the external electronic device. For example, the processor 500 may determine that the external electronic device 1 210 is able to configure an NDP when the number of NAN data paths configured for the external electronic device 1 210 is less than a designated reference number (e.g., a maximum value). For example, when the number of NAN data paths configured for the external electronic device 1 210 is equal to or greater than a designated reference number (e.g., a maximum value), the processor 500 may determine that the external electronic device 1 210 is unable to additionally configure an NDP. For example, the designated reference number may include a maximum number supported by the communication circuit 502.

According to an embodiment, when it is determined that the external electronic device is able to additionally configure an NDP, based on the number of NDP configurations of the external electronic device (e.g., "Yes" in operation 703), the external electronic device (e.g., the external electronic device 1 210) or the processor (e.g., the processor 120 or 500) may configure an operation state related to NAN communication of the external electronic device as a first state (e.g., activate) in operation 705.

According to an embodiment, when it is determined that the external electronic device is unable to additionally configure an NDP, based on the number of NDP configurations of the external electronic device (e.g., "No" in operation 703), the external electronic device (e.g., the external electronic device 1 210) or the processor (e.g., the processor 120 or 500) may configure the operation state related to NAN communication of the external electronic device as a second state (e.g., holding) in operation 707.

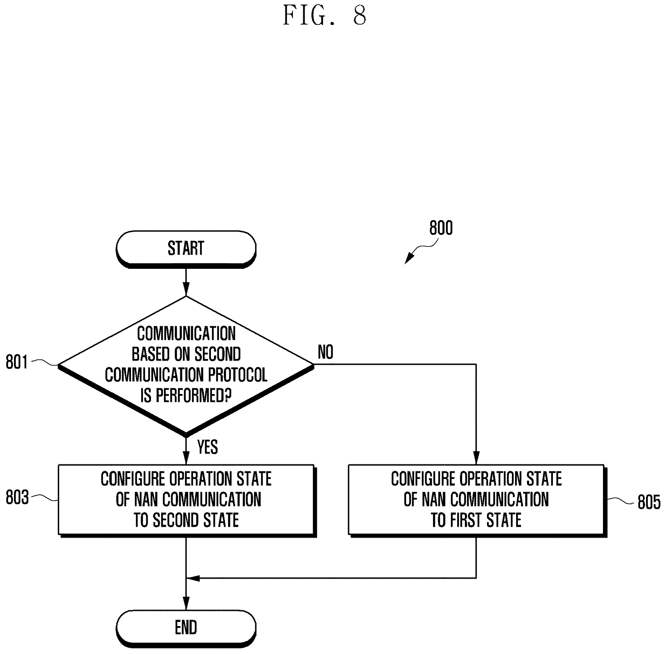

FIG. 8 is a flowchart 800 illustrating configuration of an operation state of NAN communication, based on a second communication protocol, in an external electronic device according to an embodiment. According to an embodiment, at least a part of FIG. 8 may include a detailed operation of operation 603 of FIG. 6. In the following embodiments, each of the operations may be performed in a sequential manner, but is not necessarily performed in a sequential manner. For example, the order of the operations may be changed, and at least two operations may be performed in parallel. For example, the external electronic device of FIG. 8 may be the electronic device 101 of FIG. 1 or the external electronic device 1 210 of FIG. 2, FIG. 3, FIG. 4, or FIG. 5.

Referring to an embodiment of FIG. 8, the external electronic device (e.g., the external electronic device 1 210) or the processor (e.g., the processor 120 of FIG. 1 or the processor 500 of FIG. 5) may, in case that the NAN communication is activated (e.g., operation 601 of FIG. 6), identify whether the external electronic device performs communication based on the second communication protocol in operation 801. For example, the second communication protocol may be a communication protocol different from the first communication protocol for NAN communication, and may support other wireless LAN communication other than NAN communication, such as Wi-Fi, Wi-Fi direct, or a mobile hotspot.

According to an embodiment, when it is determined that communication based on a second communication protocol is performed (e.g., "Yes" in operation 801), the external electronic device (e.g., the external electronic device 1 210) or the processor (e.g., the processor 120 or 500) may configure an operation state related to NAN communication of the external electronic device as a first state (e.g., "activate") in operation 803. For example, the state in which communication based on the second communication protocol is determined to be performed may include at least one of a state in which communication based on the second communication protocol is determined to be performed, and a state in which communication based on the second communication protocol is determined to be in progress.

According to an embodiment, when it is determined that communication based on the second communication protocol is not performed (e.g., "No" in operation 801), the external electronic device (e.g., the external electronic device 1 210) or the processor (e.g., the processor 120 or 500) may configure an operation state related to NAN communication of the external electronic device as a second state (e.g., holding) in operation 805.

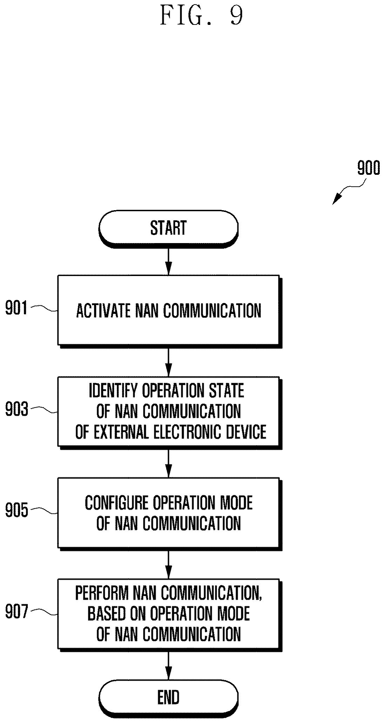

FIG. 9 is a flowchart 900 illustrating performance of a NAN communication in an electronic device according to an embodiment. In the following embodiments, each of the operations may be performed sequentially, but is not necessarily performed sequentially. For example, the order of the operations may be changed, and at least two operations may be performed in parallel. For example, the electronic device of FIG. 9 may be the electronic device 101 of FIG. 1, FIG. 2, FIG. 3, FIG. 4, or FIG. 5.

Referring to an embodiment of FIG. 9, an electronic device (e.g., the electronic device 101) or a processor (e.g., the processor 120 of FIG. 1 or the processor 520 of FIG. 5) may activate NAN communication in operation 901. For example, when information related to NAN communication is received through a low-power interface-based discovery mode, the processor 520 may control the communication circuit 522 to activate NAN communication. For example, the low-power interface-based discovery mode may include at least one of an out-of-band (OOB) scheme, a Layer-3 discovery protocol scheme related to a universal plug and play (uPnP) or a multicast domain name system (mDNS), a cloud server request scheme, or a wireless LAN search scheme. For example, the information related to NAN communication may include at least one of information related to the external electronic device 1 210 or information related to the application program executed in the external electronic device 1 210. For example, the information related to the external electronic device 1 210 may include at least one of identification information of the external electronic device 1 210 (e.g., a device name), contact information of the external electronic device 1 210, information related to NAN communication of the external electronic device 1 210, or user information. For example, the information related to the application program may include at least one of identification information of the application program or information related to a function or service provided through the application program.

For example, when information related to NAN communication is received through a low-power interface-based discovery mode, the processor 520 may identify information related to the application program of the external electronic device 1 210. When it is determined, based on information related to the application program of the external electronic device 1 210, that NAN communication with the external electronic device 1 210 can be supported, the processor 520 may control the communication circuit 522 to activate the NAN communication.

For example, the processor 520 may identify, in the case of receiving information related to NAN communication through the low-power interface-based discovery mode, information related to an application program of the external electronic device 1 210 and operation state information related to NAN communication thereof. When it is determined, based on the information related to the application program of the external electronic device 1 210, that NAN communication with the external electronic device 1 210 can be supported and that the operation state related to NAN communication of the external electronic device 1 210 is a first state, the process 520 may control the communication circuit 522 to activate the NAN communication. For example, the operation state information related to NAN communication of the external electronic device 1 210 may be included in the information related to NAN communication, or may be received via a separate message from the information related to NAN communication.

According to an embodiment, in operation 903, the electronic device (e.g., the electronic device 101) or the processor (e.g., the processor 120 or 520) may identify an operation state related to NAN communication of the external electronic device (e.g., the external electronic device 1 210) in a state in which NAN communication is activated. For example, the operation state related to NAN communication of the external electronic device may be identified from the operation state information related to NAN communication of the external electronic device (e.g., the external electronic device 1 210) received from the external electronic device. For example, the operation state information related to NAN communication of the external electronic device 1 210 may be periodically or aperiodically received through at least one of an OOB scheme, a Layer-3 discovery protocol scheme related to uPnP or mDNS, a cloud server request scheme, or a wireless LAN frame. For example, aperiodic reception of the operation state information related to NAN communication of the external electronic device 1 210 may include a series of operations in which the operation state information related to NAN communication is received from the external electronic device 1 210, based on a change in the operation state related to NAN communication of the external electronic device 1 210.

According to an embodiment, in operation 905, the electronic device (e.g., the electronic device 101) or the processor (e.g., the processor 120 or 520) may configure an operation mode for NAN communication of the electronic device, based on an operation state related to NAN communication of the external electronic device (e.g., the external electronic device 1 210). For example, the processor 520 may configure the operation mode for NAN communication of the electronic device 101 to a first mode (or active mode) in case that the operation state related to NAN communication of the external electronic device 1 210 is a first state. For example, in case that the operation state related to NAN communication of the external electronic device 1 210 is a second state, the processor 520 may configure the operation mode for NAN communication of the electronic device 101 to a second mode (or low-power mode). For example, the operation mode for NAN communication is an operation mode used by the electronic device 101 to perform NAN communication, and may include an active mode (e.g., a first mode) and a low-power mode (e.g., a second mode).

According to an embodiment, in operation 907, the electronic device (e.g., the electronic device 101) or the processor (e.g., the processor 120 or 520) may perform NAN communication, based on an operation mode for NAN communication of the electronic device. For example, in case that the operation mode related to NAN communication for the electronic device 101 is configured as a first mode (e.g., an active mode), the processor 520 may control the communication circuit 522 to perform NAN synchronization or USD. In case that the external electronic device 1 210 for NAN communication is detected through NAN synchronization or USD, the processor 520 may control the communication circuit 522 to perform operations related to NAN communication with the external electronic device 1 210. For example, operations related to NAN communication may include at least one of data communication or distance measurement (e.g., ranging). For example, in case that the operation mode of the electronic device 101 related to NAN communication is configured as the second mode (e.g., the low-power mode), the processor 520 may control the communication circuit 522 to operate in a low-power mode related to NAN communication. For example, the low-power mode related to NAN communication may include a series of operations to deactivate (or terminate) the NAN communication for the electronic device 101. For example, a low-power mode related to NAN communication may include a series of operations of maintaining only operations (e.g., synchronization) in a discovery window of NAN communication, and deactivating other operations. For example, the operation in the discovery window may include transmitting or receiving a beacon, SDF, or NAF in a discovery window (DW). For example, a discovery window interval may be relatively expanded in a low-power mode. For example, the other operations may include at least one of USD, NAN communication-based data communication, or distance measurement (e.g., ranging).

According to an embodiment, in case that NAN communication is activated, the electronic device 101 may periodically, aperiodically, or continuously identify an operation state related to NAN communication of the external electronic device 1 210. The electronic device 101 may reconfigure an operation mode related to NAN communication of the electronic device 101, based on the operation state related to NAN communication of the external electronic device 1 210.

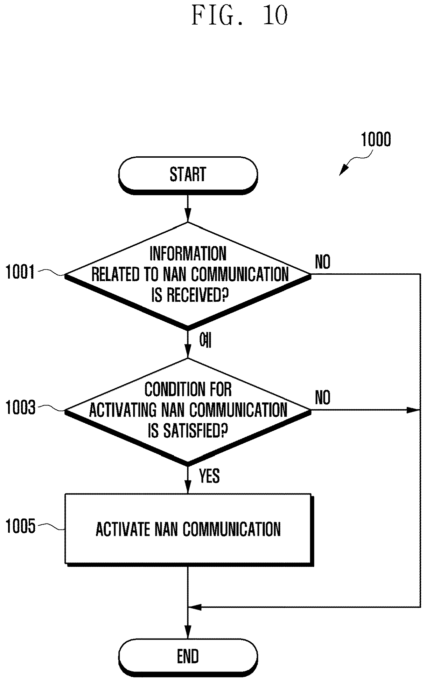

FIG. 10 is a flowchart 1000 illustrating activation of NAN communication in an electronic device according to an embodiment. According to an embodiment, at least a part of FIG. 10 may include a detailed operation of operation 901 of FIG. 9. In the following embodiments, each of the operations may be performed in sequence, but is not necessarily performed in sequence. For example, the order of each of the operations may be changed, and at least two of the operations may be performed in parallel. For example, the electronic device of FIG. 10 may be the electronic device 101 of FIG. 1, FIG. 2, FIG. 3, FIG. 4, or FIG. 5.

Referring to an embodiment illustrated in FIG. 10, an electronic device (e.g., the electronic device 101) or a processor (e.g., the processor 120 of FIG. 1 or the processor 520 of FIG. 5) may identify whether information related to NAN communication of an external electronic device (e.g., the external electronic device 1 210) is received in operation 1001. For example, the processor 520 may receive information related to NAN communication through a low-power interface-based discovery mode. For example, the low-power interface-based discovery mode may include at least one of an out of band (OOB) scheme, a Layer-3 discovery protocol scheme related to a universal plug and play (uPnP) or a multicast domain name system (mDNS), a cloud server request scheme, or a wireless LAN search scheme. For example, information related to NAN communication may include at least one of information related to the external electronic device 1 210 or information related to an application program executed on the external electronic device 1 210. For example, the information related to the external electronic device 1 210 may include at least one of identification information of the external electronic device 1 210 (e.g., a device name), contact information of the external electronic device 1 210, information related to NAN communication of the external electronic device 1 210, or user information. For example, the information related to the application program may include at least one of identification information of the application program and information related to a function or a service provided through the application program.

According to an embodiment, in case that the information related to NAN communication is received (e.g., "Yes" in operation 1001), the electronic device (e.g., the electronic device 101) or the processor (e.g., the processor 120 or 520) may identify whether a designated activation condition of NAN communication is satisfied, based on the information related to NAN communication, in operation 1003. For example, when the information related to NAN communication is received through a low-power interface-based discovery mode, the processor 520 may identify information related to an application program of the external electronic device 1 210. When it is determined, based on information related to the application program of the external electronic device 1 210, that the electronic device 101 is capable of supporting NAN communication with the external electronic device 1 210, the processor 520 may determine that a designated NAN communication activation condition is satisfied.

For example, when the information related to NAN communication is received through a low-power interface-based discovery mode, the processor 520 may identify information related to an application program of the external electronic device 1 210 and operation state information related to NAN communication thereof. When it is determined, based on information related to an application program of the external electronic device 1 210, that the electronic device 101 is capable of supporting NAN communication with the external electronic device 1 210, and that an operation state related to NAN communication of the external electronic device 1 210 is a first state, the processor 520 may determine that a designated NAN communication activation condition is satisfied. For example, the operation state information related to NAN communication of the external electronic device 1 210 may be included in the information related to NAN communication, or may be received through a separate message from the information related to NAN communication.

For example, the processor 520 may determine that the designated NAN communication activation condition is not satisfied in case that the electronic device 101 is unable to support NAN communication with the external electronic device 1 210 or that the operation state related to NAN communication of the external electronic device 1 210 is a second state.

According to an embodiment, in the case that information related to NAN communication is not received (e.g., "No" in operation 1001) or in the case that a designated NAN communication activation condition is not satisfied (e.g., "No" in operation 1003), the electronic device (e.g., the electronic device 101) or the processor (e.g., the processor 120 or 520) may terminate the process for activating NAN communication in the embodiment.

According to an embodiment, in case that a designated NAN communication activation condition is satisfied (e.g., "Yes" in operation 1003), the electronic device (e.g., the electronic device 101) or the processor (e.g., the processor 120 or 520) may activate the NAN communication for the electronic device 101 in operation 1005.

According to an embodiment, the electronic device 101 may, based on activation of NAN communication, control the communication circuit 510 to search for an external electronic device for NAN communication via NAN synchronization or unsynchronized service discovery (USD).

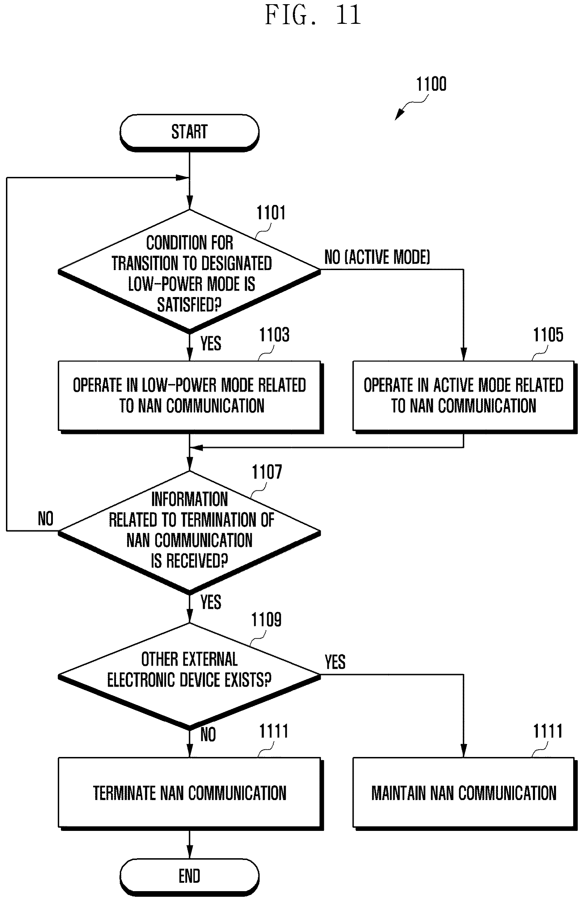

FIG. 11 is a flowchart 1100 illustrating a transition of an operation mode of NAN communication in an electronic device according to an embodiment. According to an embodiment, at least a part of FIG. 11 may include a detailed operation of operation 905 and operation 907 of FIG. 9. In the following embodiments, each of the operations may be performed sequentially, but is not necessarily performed sequentially. For example, the order of the respective operations may be changed, and at least two operations may be performed in parallel. For example, the electronic device of FIG. 11 may be the electronic device 101 of FIG. 1, FIG. 2, FIG. 3, FIG. 4, or FIG. 5.

According to an embodiment referring to FIG. 11, when an electronic device (e.g., the electronic device 101) or a processor (e.g., the processor 120 of FIG. 1 or the processor 520 of FIG. 5) identifies an operation state related to NAN communication of an external electronic device (e.g., the external electronic device 1 (210)) (e.g., operation 903 of FIG. 9), the electronic device or the processor may, in operation 1101, identify whether a designated condition for transition to a low-power mode is satisfied, based on the operation state related to NAN communication of the external electronic device (e.g., the external electronic device 1 210). For example, when the operation state of the external electronic device 1 210 is configured as a second state, the processor 520 may determine that the designated condition for transition to the low-power mode is satisfied. For example, when the operation state of the external electronic device 1 210 is configured as a first state, the processor 520 may determine that the designated condition for transition to the low-power mode is not satisfied.

According to an embodiment, in case that a designated condition for transition to a low-power mode is satisfied (e.g., "Yes" in operation 1101), the electronic device (e.g., the electronic device 101) or the processor (e.g., the processor 120 or 520) may operate in a low-power mode related to NAN communication in operation 1103. For example, when the designated condition for transition to a designated low-power mode is satisfied, the processor 520 may control the communication circuit 522 to deactivate (or terminate) the NAN communication for the electronic device 101, based on a low-power mode related to NAN communication.

For example, when the designated condition for transition to the low-power mode is satisfied, the processor 520 may control the communication circuit 522 to maintain only an operation (e.g., synchronization) in a discovery window of NAN communication based on a low-power mode related to NAN communication and to deactivate other operations. For example, the operation in the discovery window may include transmitting or receiving a beacon, an SDF, or an NAF in the discovery window (DW). For example, a discovery window interval may be relatively expanded in a low-power mode. For example, the other operations may include at least one of USD, NAN communication-based data communication, or distance measurement (e.g., ranging).

According to an embodiment, when the designated condition for transition to a low-power mode is not satisfied (e.g., "No" in operation 1101), the electronic device (e.g., the electronic device 101) or the processor (e.g., the processor 120 or 520) may operate in an active mode related to NAN communication in operation 1105. For example, when the operation state of the external electronic device 1 210 is configured as a first state, the processor 520 may control the communication circuit 522 to perform operations related to NAN communication, based on an active mode related to NAN communication. For example, the processor 520 may control the communication circuit 522 to perform NAN synchronization or USD, based on the active mode related to NAN communication. In case that the external electronic device 1 210 for NAN communication is detected through NAN synchronization or USD, the processor 520 may control the communication circuit 522 to perform operations related to NAN communication with the external electronic device 1 210. For example, the operation related to NAN communication may include at least one of data communication or distance measurement (e.g., ranging).

According to an embodiment, in operation 1107, the electronic device (e.g., the electronic device 101) or the processor (e.g., the processor 120 or 520) may identify whether information related to termination of NAN communication is received while NAN communication is in an active state. For example, the information related to the termination of NAN communication may be received through at least one of an OOB scheme, a Layer-3 discovery protocol scheme related to uPnP or mDNS, a cloud server request scheme, or a wireless LAN frame.

According to an embodiment, in case that information related to termination of NAN communication is not received (e.g., "No" in operation 1107), the electronic device (e.g., the electronic device 101) or the processor (e.g., the processor 120 or 520) may, in operation 1101, determine whether a designated condition for transition to a low-power mode is satisfied, based on the operation state related to NAN communication of the external electronic device (e.g., the external electronic device 1 210).

According to an embodiment, in case that information related to termination of NAN communication is received (e.g., "Yes" in operation 1107), the electronic device (e.g., the electronic device 101) or the processor (e.g., the processor 120 or 520) may, in operation 1109, identify whether there exists another external electronic device (e.g., the external electronic devices 220 and/or 230 in FIG. 2), other than the external electronic device 1 210, with which the electronic device 101 is performing NAN communication. For example, in case that information related to the termination of NAN communication is received from the external electronic device 1 210, the processor 520 may determine that the NAN communication with the external electronic device 1 210 has been terminated. The processor 520 may, based on the termination of NAN communication with the external electronic device 1 210, identify whether the electronic device 101 is performing NAN communication with another external electronic device (e.g., the external electronic device 220 and/or 230 in FIG. 2).

According to an embodiment, when there is no other external electronic device (e.g., the external electronic device 220 and/or 230 of FIG. 2) with which the electronic device 101 is performing NAN communication (e.g., "No" in operation 1109), the electronic device (e.g., the electronic device 101) or the processor (e.g., the processor 120 or 520) may terminate the NAN communication in operation 1111. For example, in case that there is no other external electronic device (e.g., the external electronic devices 220 and/or 230 of FIG. 2), except for the external electronic device 1 210, with which the electronic device 101 is performing NAN communication, the processor 520 may control the communication circuit 522 to terminate NAN communication. For example, the termination of NAN communication may be performed after a designated time elapses from a time point at which the termination of the NAN communication is determined or from a time point at which information related to the termination of NAN communication is received.

According to an embodiment, when another external electronic device (e.g., the external electronic devices 220 and/or 230 of FIG. 2) with which the electronic device 101 is performing NAN communication exists (e.g., "Yes" in operation 1109), the electronic device (e.g., the electronic device 101) or the processor (e.g., the processor 120 or 520) may maintain the NAN communication with the other external electronic device in operation 1113. For example, when another external electronic device (e.g., the external electronic device 220 and/or 230 of FIG. 2), excluding the external electronic device 1 210, with which the electronic device 101 is performing NAN communication exists, the processor 520 may control the communication circuit 522 to maintain the NAN communication.

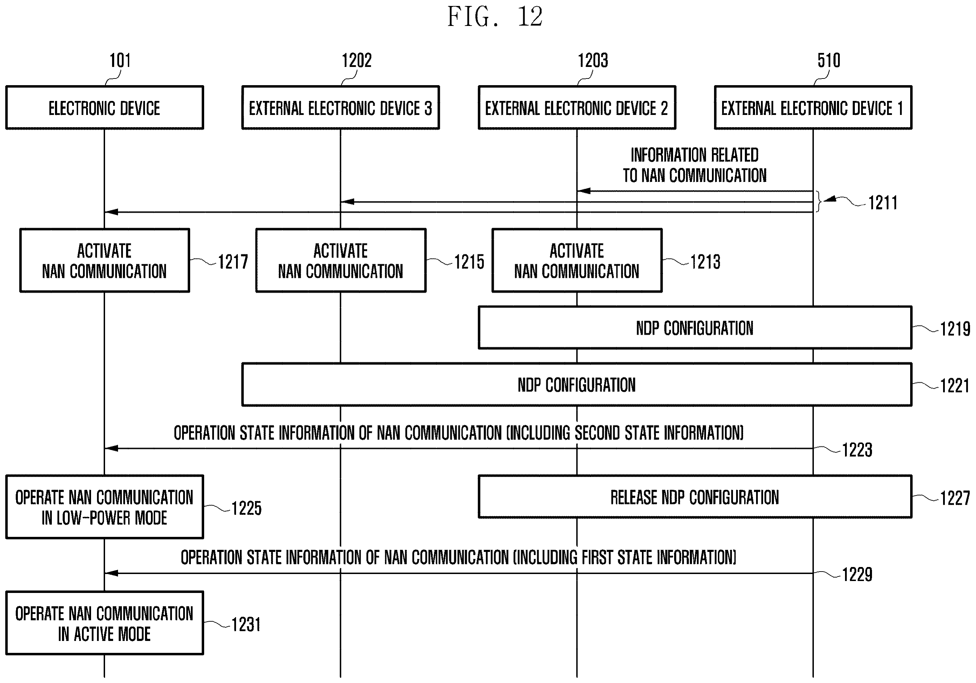

FIG. 12 illustrates an example of configuring a NAN communication mode, based on an NDP configuration, in an electronic device according to an embodiment.

Referring to an embodiment in FIG. 12, an external electronic device 1 210 may transmit (or broadcast) information related to NAN communication when a NAN activation event is detected (e.g., operation 1211). For example, the external electronic device 1 210 may activate NAN communication, based on detecting a NAN activation event or transmitting information related to NAN communication. For example, the NAN activation event may be generated based on at least one of execution of an application program or a function related to NAN communication, reception of a user input (e.g., a touch input or a voice input), reception of a control signal, or detection of a gesture input. For example, the NAN activation event may be generated based on execution of a user interface associated with a NAN discovery. For example, information related to NAN communication may be transmitted through a low-power interface-based discovery mode. For example, the low-power interface-based discovery mode may include at least one of an out-of-band (OOB) scheme, a Layer-3 discovery protocol scheme related to a universal plug and play (uPnP) or a multicast domain name system (mDNS), a cloud server request scheme, or a wireless LAN search scheme.

According to an embodiment, at least one of the external electronic device 2 220, the external electronic device 3 230, or the electronic device 101 may activate NAN communication, based on receiving information related to NAN communication (e.g., operation 1213, operation 1215, and operation 1217). For example, at least one of the external electronic device 2 220, the external electronic device 3 230, or the electronic device 101 may, based on activation of NAN communication, perform NAN synchronization or unsynchronized service discovery (USD) to search for an external electronic device for NAN communication.

According to an embodiment, the external electronic device 1 210 may configure a NAN data path (e.g., NDP) with the external electronic device 2 220 and the external electronic device 3 230 (e.g., operation 1219 and operation 1221). For example, the external electronic device 1 210 may search for the external electronic device 3 230 or another electronic device (e.g., the electronic device 101, the external electronic device 2 220) capable of performing NAN communication. The external electronic device 1 210 may configure a NAN data path (e.g., NDP) with the external electronic device 2 220 and the external electronic device 3 230, which are selected based on a user input from among other electronic devices capable of performing NAN communication. For example, another electronic device capable of performing NAN communication may be identified based on a response to information related to NAN communication received through a low-power interface-based discovery mode. For example, other electronic devices capable of performing NAN communication may be identified through NAN synchronization and cluster configuration. For example, another electronic device capable of performing NAN communication may be identified through a USD. For example, the USD may include a series of operations in which the USD continuously searches for an external electronic device during a designated time through NAN communication, instead of performing synchronization with the external electronic device.

According to an embodiment, the external electronic device 1 210 may, based on activation of NAN communication, identify an operation state related to NAN communication of the external electronic device 1 210. For example, the processor 500 may configure (or identify) an operation state related to NAN communication of the external electronic device 1 210, based on at least one of a capability of the external electronic device 1 210, a user input, or a service type. For example, the capability of the external electronic device 1 210 may include information on the number of NAN data paths (e.g., NDPs) configured for the external electronic device 1 210 or information related to communication (e.g., Wi-Fi or Wi-Fi direct) based on the second communication protocol. For example, the second communication protocol may be a communication protocol different from the first communication protocol for NAN communication, and may support other wireless LAN communications other than NAN communication, such as Wi-Fi, Wi-Fi direct, or a mobile hotspot. For example, the operation state related to NAN communication may include whether the external electronic device 1 210 is in a state capable of performing an operation based on NAN communication.

According to an embodiment, the external electronic device 1 210 may transmit operation state information related to NAN communication of the external electronic device 1 210 (e.g., operation 1223). For example, in case that the number (e.g., 2) of NAN data paths configured for the external electronic device 1 210 is equal to or greater than a designated reference number (e.g., a maximum value), the external electronic device 1 210 may configure the operation state related to NAN communication of the external electronic device 1 210 as a second state. The external electronic device 1 210 may transmit the operation state information related to NAN communication of the external electronic device 1 210 configured as the second state. For example, the second state may indicate a state in which the external electronic device 1 210 is unable to additionally perform operations based on NAN communication.

For example, the operation state information related to NAN communication of the external electronic device 1 210 may be transmitted (or broadcast) periodically or aperiodically. For example, aperiodic transmission of the operation state information related to NAN communication for the external electronic device 1 210 may include a series of operations in which the operation state information related to NAN communication of the external electronic device 1 210 is transmitted based on a change in the operation state related to NAN communication of the external electronic device 1 210. For example, the operation state information related to NAN communication of the external electronic device 1 210 may be transmitted through at least one of an OOB scheme, a Layer-3 discovery protocol scheme related to uPnP or mDNS, a cloud server request scheme, or a wireless LAN frame. For example, the operation state (e.g., the second state) related to NAN communication for the external electronic device 1 210 may be included in the form of at least one of a string or a designated value. For example, the operation state information related to NAN communication of the external electronic device 1 210 may be transmitted in a broadcast form. For example, the operation state information related to NAN communication of the external electronic device 1 210 may be transmitted in a unicast or multicast form, based on a designated address (for example, an address or a group address).

According to an embodiment, the electronic device 101 may identify an operation state of the external electronic device 1 210 relating to NAN communication while the NAN communication is activated. The electronic device 101 may configure an operation mode for NAN communication of the electronic device 101, based on the operation state related to NAN communication of the external electronic device 1 210. For example, in case that the operation state related to NAN communication of the external electronic device 1 210 is a second state, the electronic device 101 may configure an operation mode for the NAN communication for the electronic device 101 to a second mode (or the low-power mode). The electronic device 101 may operate in a low-power mode related to NAN communication, based on the configuration of the operation mode for NAN communication to the second mode (or the low-power mode) (e.g., operation 1225). For example, the electronic device 101 may deactivate (or terminate) NAN communication for the electronic device 101, based on configuration of an operation mode for NAN communication to a second mode (or a low-power mode). For example, the electronic device 101 may maintain only an operation (e.g., synchronization) in a discovery window of NAN communication, and deactivate other operations, based on the configuration of the operation mode for NAN communication to a second mode (or a low-power mode). For example, the operation in the discovery window may include transmitting or receiving a beacon, an SDF, or an NAF in the discovery window (DW). For example, a discovery window interval may be relatively expanded in a low-power mode. For example, the other operations may include at least one of USD, NAN communication-based data communication, or distance measurement (e.g., ranging).

According to an embodiment, the external electronic device 1 210 may release the configuration of a NAN data path with the external electronic device 2 220, based on termination of data communication with the external electronic device 2 220 (e.g., operation 1227).

According to an embodiment, the external electronic device 1 210 may configure (or change) the operation state related to NAN communication of the external electronic device 1 210 as a first state, based on a release of the NAN data path with the external electronic device 2 220. For example, based on the deactivation of the NAN data path with the external electronic device 2 220, when the number (e.g., 1) of NAN data paths configured for the external electronic device 1 210 is less than a designated reference number (e.g., the maximum value), the external electronic device 1 210 may configure (or change) the operation state related to NAN communication of the external electronic device 1 210 as a first state.

According to an embodiment, the external electronic device 1 210 may transmit operation state information related to NAN communication of the external electronic device 1 210, wherein the operation state is configured as a first state (e.g., operation 1229). For example, the first state may indicate a state in which the external electronic device 1 210 is capable of additionally performing an operation based on NAN communication. For example, operation state information related to NAN communication of the external electronic device 1 210 may be transmitted (or broadcast) periodically or aperiodically. For example, the operation state information related to NAN communication of the external electronic device 1 210 may be transmitted in the form of a broadcast. For example, the operation state information related to NAN communication of the external electronic device 1 210 may be transmitted in a unicast or multicast form, based on a designated address (e.g., address or group address).

According to an embodiment, the electronic device 101 may identify an operation state related to NAN communication of the external electronic device 1 210 in a state in which NAN communication is activated. The electronic device 101 may configure an operation mode for NAN communication for the electronic device 101 to a first mode (or active mode), in case that the operation state related to NAN communication of the external electronic device 1 210 is a first state. The electronic device 101 may operate in an active mode related to NAN communication, based on a configuration of an operation mode for NAN communication as a first mode (or active mode) (e.g., operation 1231). For example, the electronic device 101 may perform NAN synchronization or USD, based on a configuration of the operation mode for NAN communication to the first mode (or active mode). In case that the external electronic device 1 210 for NAN communication is detected through NAN synchronization or USD, the electronic device 101 may perform operations related to NAN communication with the external electronic device 1 210. For example, the operations related to NAN communication may include at least one of data communication or distance measurement (e.g., ranging).

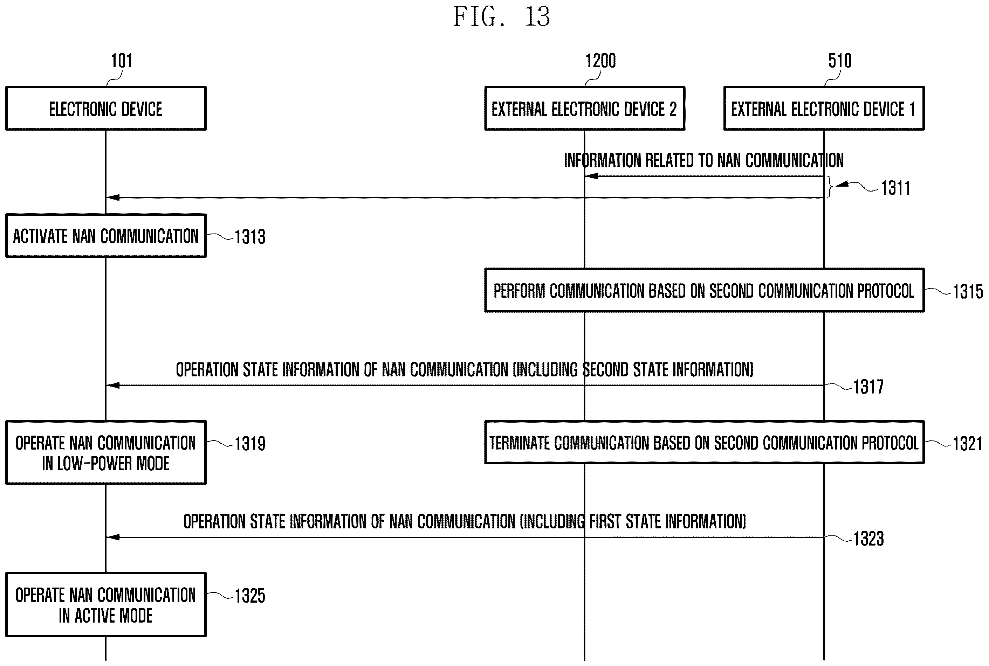

FIG. 13 illustrates an example of configuring a NAN communication mode, based on a second communication protocol, in an electronic device according to an embodiment.

Referring to an embodiment illustrated in FIG. 13, when a NAN activation event is detected, the external electronic device 1 210 may transmit (or broadcast) information related to NAN communication (for example, operation 1311). For example, the external electronic device 1 210 may activate NAN communication, based on detection of a NAN activation event or transmission of information related to NAN communication. For example, the NAN activation event may be generated based on at least one of execution of an application program or function related to NAN communication, reception of a user input (e.g., a touch input or a voice input), reception of a control signal, and detection of a gesture input. For example, the NAN activation event may occur, based on execution of a user interface related to NAN discovery. For example, information related to NAN communication may be transmitted through a low-power interface-based discovery mode. For example, the low-power interface-based discovery mode may include at least one of an out-of-band (OOB) scheme, a Layer-3 discovery protocol scheme related to a universal plug and play (uPnP) or a multicast domain name system (mDNS), a cloud server request scheme, or a wireless LAN search scheme.

According to an embodiment, the electronic device 101 may activate NAN communication, based on receiving information related to NAN communication (e.g., operation 1313). For example, the electronic device 101 may, based on activation of NAN communication, perform NAN synchronization or unsynchronized service discovery (USD) to search for an external electronic device for NAN communication.

According to an embodiment, the external electronic device 1 210 may perform wireless LAN communication (e.g., Wi-Fi direct or mobile hotspot), which is based on a second communication protocol, with the external electronic device 2 220 (e.g., operation 1315).

According to an embodiment, the external electronic device 1 210 may, based on activation of NAN communication, identify the operation state related to NAN communication of the external electronic device 1 210. For example, the processor 500 may configure the operation state related to NAN communication of the external electronic device 1 210 as a second state, based on the wireless LAN communication (e.g., Wi-Fi direct or mobile hot spot) with the external electronic device 2 220, which is based on the second communication protocol.

According to an embodiment, the external electronic device 1 210 may transmit operation state information related to NAN communication of the external electronic device 1 210 (e.g., operation 1317). For example, the external electronic device 1 210 may transmit the operation state information related to NAN communication of the external electronic device 1 210, wherein the operation state is configured as the second state. For example, the second state may indicate a state in which the external electronic device 1 210 is unable to additionally perform operations based on NAN communication. For example, the operation state information related to NAN communication of the external electronic device 1 210 may be transmitted (or broadcast) periodically or aperiodically. For example, aperiodic transmission of the operation state information related to NAN communication for the external electronic device 1 210 may include a series of operations in which the operation state information related to NAN communication of the external electronic device 1 210 is transmitted based on a change in the operation state related to NAN communication of the external electronic device 1 210. For example, the operation state information related to NAN communication of the external electronic device 1 210 may be transmitted through at least one of an OOB scheme, a Layer-3 discovery protocol scheme related to uPnP or mDNS, a cloud server request scheme, and a wireless LAN frame. For example, the operation state (e.g., the second state) related to NAN communication for the external electronic device 1 210 may be included in the form of at least one of a string or a designated value. For example, the operation state information related to NAN communication of the external electronic device 1 210 may be transmitted in a broadcast form. For example, the operation state information related to NAN communication of the external electronic device 1 210 may be transmitted in the form of unicast or multicast, based on a designated address (e.g., address or group address).

According to an embodiment, the electronic device 101 may configure an operation mode for the NAN communication for the electronic device 101, based on an operation state related to NAN communication of the external electronic device 1 210, in a state where the NAN communication is activated. For example, when the operation state related to NAN communication of the external electronic device 1 210 is a second state, the electronic device 101 may configure an operation mode for the NAN communication for the electronic device 101 to a second mode (or a low-power mode). The electronic device 101 may operate in a low-power mode related to NAN communication, based on a configuration of the operation mode for NAN communication to the second mode (or the low-power mode) (e.g., operation 1319). For example, the electronic device 101 may deactivate (or terminate) NAN communication for the electronic device 101, based on the configuration of the operation mode for NAN communication to the second mode (or the low-power mode). For example, the electronic device 101 may maintain only an operation (e.g., synchronization) in a discovery window for NAN communication, and deactivate other operations, based on the configuration of the operation mode for NAN communication as the second mode (or the low-power mode). For example, the operation in a discovery window may include transmitting or receiving a beacon, SDF, or NAF in a discovery window (DW). For example, a discovery window interval may be relatively expanded in the low-power mode. For example, the other operations may include at least one of USD, NAN communication-based data communication, or distance measurement (e.g., ranging).

According to an embodiment, the external electronic device 1 210 may terminate wireless LAN communication, which is based on a second communication protocol, with the external electronic device 2 220 (e.g., operation 1321).

According to an embodiment, based on termination of the wireless LAN communication with the external electronic device 2 220, the wireless LAN communication being based on a second communication protocol, the external electronic device 1 210 may configure (or change) the operation state related to NAN communication of the external electronic device 1 210 as a first state.

According to an embodiment, the external electronic device 1 210 may transmit the operation state information related to NAN communication of the external electronic device 1 210, wherein the operation state has been configured as a first state (e.g., operation 1323). For example, the first state may indicate a state in which the external electronic device 1 210 is able to additionally perform an operation based on NAN communication. For example, the operation state information related to NAN communication of the external electronic device 1 210 may be transmitted (or broadcast) periodically or aperiodically.

According to an embodiment, in a state where NAN communication is activated, the electronic device 101 may configure an operation mode for NAN communication of the electronic device 101, based on an operation state related to NAN communication of the external electronic device 1 210. For example, when the operation state related to NAN communication of the external electronic device 1 210 is a first state, the electronic device 101 may configure an operation mode for NAN communication to a first mode (or an active mode). The electronic device 101 may operate in an active mode related to NAN communication, based on configuration of the operation mode for NAN communication to the first mode (or the active mode) (e.g., operation 1325). For example, based on configuration of the operation mode for NAN communication to the first mode (or the active mode), the electronic device 101 may perform NAN synchronization or USD. When the external electronic device 1 210 for NAN communication is detected through NAN synchronization or USD, the electronic device 101 may perform an operation related to NAN communication with the external electronic device 1 210. For example, the operation related to NAN communication may include at least one of data communication or distance measurement (e.g., ranging).

According to an embodiment, a method for operating an electronic device (e.g., the electronic device 101 of FIG. 1, FIG. 2, FIG. 3, FIG. 4, or FIG. 5) may include receiving operation state information related to NAN communication of an external electronic device (e.g., the external electronic device 1 210 of FIG. 2, FIG. 3, FIG. 4, or FIG. 5) in a state in which NAN communication is activated. According to an embodiment, the method for operating the electronic device may include identifying whether a condition related to a transition to a low-power mode is satisfied, based on an operation state of NAN communication of the external electronic device, identified from the operation state information related to NAN communication of the external electronic device. According to an embodiment, the method for operating the electronic device may include performing NAN communication in the low-power mode, based on a determination that the condition related to transition to a low-power mode is satisfied.

According to an embodiment, the method for operating the electronic device may include activating NAN communication, based on reception of information related to NAN communication through at least one of an out of band (OOB) scheme, a Layer-3 discovery protocol scheme related to a universal plug and play (uPnP) or a multicast domain name system (mDNS), a cloud server request scheme, or a wireless LAN frame.

According to an embodiment, in the method for operating the electronic device, the identifying of the operation state of NAN communication may include receiving the operation state information related to NAN communication of the external electronic device through at least one of an OOB scheme, a Layer-3 discovery protocol scheme related to uPnP or mDNS, a cloud server request scheme, or a wireless LAN frame.

According to an embodiment, the performance of NAN communication in the low-power mode may include, in case that unsynchronized service discovery (USD) is activated based on activation of NAN communication, terminating USD in a state in which NAN communication is activated, based on a determination that the condition related to transition to the low-power mode is satisfied.

According to an embodiment, the method for operating the electronic device may include expanding a period of a discovery window of NAN communication to a period having a designated size, based on termination of the USD.

According to an embodiment, the method for operating the electronic device may include identifying an operation state of NAN communication of the external electronic device in a state in which the electronic device has been transitioned to the low-power mode. According to an embodiment, the method for operating an electronic device may include identifying whether a condition related to a transition to an active mode is satisfied, based on an operation state of NAN communication for an external electronic device. According to an embodiment, the method for operating the electronic device may include transitioning the NAN communication to an active mode, based on a determination that the condition related to transition to the active mode is satisfied.

According to an embodiment, the transitioning of the NAN communication to an active mode may include activating an unsynchronized service discovery (USD), based on a determination that a condition related to a transition to the active mode is satisfied.

According to an embodiment, the method for operating the electronic device may include, in case that the NAN communication is transitioned to an active mode, establishing a NAN data link with an external electronic device. According to an embodiment, the method for operating the electronic device may include performing at least one of transmitting or receiving at least one of a signal or data to or from the external electronic device through a NAN data link.

According to an embodiment, the identifying of whether the condition related to the transition to a low-power mode is satisfied may include, in case that the electronic device 101 is determined to be capable of performing NAN communication with the external electronic device, determining that the condition related to the transition to the low-power mode is not satisfied based on the operation state of NAN communication of the external electronic device.

According to an embodiment, the identifying of whether the condition related to the transition to a low-power mode is satisfied may include, in case that the electronic device 101 is determined to have restricted NAN communication with the external electronic device, determining that the condition related to the transition to the low-power mode is satisfied based on the operation state of NAN communication of the external electronic device.

According to an embodiment, the method for operating the electronic device may include terminating the NAN communication, in case that information related to termination of the NAN communication is received.

The embodiments of the disclosure set forth in the description and the drawings are presented only to easily describe the technical contents according to the embodiments of the disclosure and to assist in understanding the embodiments of the disclosure, and the embodiments of the disclosure are not intended to limit the scope of the embodiments of the disclosure. Therefore, the scope of the embodiments of the disclosure should be construed to include all changes or modified forms derived from the technical idea of the embodiments of the disclosure as well as the embodiments set forth herein.

## Claims

1. An electronic device comprising:
communication circuitry configured to support wireless LAN communication;
at least one processor including processing circuitry; and
memory storing instructions.
wherein the instructions, when executed by the at least one processor individually or collectively, cause the electronic device to:
receive, via the communication circuitry from an external electronic device, operation state information related to neighbor awareness networking (NAN) communication of the external electronic device in a state where the NAN communication is activated;
identify whether a condition related to switching to a low-power mode is satisfied, based on an operation state of the NAN communication of the external electronic device, identified from the operation state information related to the NAN communication of the external electronic device; and
perform the NAN communication in the low-power mode, based on determination that the condition related to switching to the low-power mode is satisfied.

2. The electronic device of claim 1, wherein the instructions, when executed by the at least one processor individually or collectively:
activate unsynchronized service discovery (USD), based on the activation of the NAN communication; and
terminate the USD while the NAN communication is activated based on determination that the condition related to switching to the low-power mode is satisfied.

3. The electronic device of claim 1, wherein the instructions, when executed by the at least one processor individually or collectively: expand a period of a discovery window of the NAN communication to a predetermined size, based on the terminating of the USD.

4. The electronic device of claim 1, wherein the instructions, when executed by the at least one processor individually or collectively:
identify an operation state of neighbor awareness networking (NAN) communication of an external electronic device while the low-power mode is performed;
identify whether a condition related to switching to an active mode is satisfied based on the operation state of the NAN communication of the external electronic device; and
switch the NAN communication to the active mode, based on determination that the condition related to switching to the active mode is satisfied.

5. The electronic device of claim 4, wherein the instructions, when executed by the at least one processor individually or collectively:
activate unsynchronized service discovery (USD), based on determination that the condition related to switching to the active mode is satisfied.

6. The electronic device of claim 1, wherein the instructions, when executed by the at least one processor individually or collectively:
establish a NAN data link with the external electronic device based on the switch of the active mode of the NAN communication; and
perform at least one of transmission or reception of at least one of a signal or data to or from the external electronic device through the NAN data link.

7. The electronic device of claim 1, wherein the instructions, when executed by the at least one processor individually or collectively:
in case that it is determined that the NAN communication can be performed based on the operation state of the NAN communication of the external electronic device, determine that the condition related to switching to the low-power mode is not satisfied; and
in case that it is determined that the NAN communication is restricted in the operation state of the NAN communication of the external electronic device, determine that the condition related to switching to the low-power mode is satisfied.

8. The electronic device of claim 1, wherein the instructions, when executed by the at least one processor individually or collectively: terminate the NAN communication when information related to the terminating of the NAN communication is received.

9. A method for operating an electronic device (101), the method comprising:
receiving, from an external electronic device, operation state information related to neighbor awareness networking (NAN) communication of the external electronic device in a state where the NAN communication is activated;
identifying whether a condition related to switching to a low-power mode is satisfied, based on an operation state of the NAN communication of the external electronic device, identified from the operation state information related to the NAN communication of the external electronic device; and
performing the NAN communication in the low-power mode, based on determination that the condition related to switching to the low-power mode is satisfied.

10. The method of claim 9, wherein the performing of the NAN communication in the low-power mode comprises, in case that unsynchronized service discovery (USD) is activated based on the activation of the NAN communication, terminating the USD in a state where the NAN communication is activated, based on the determination that the condition related to switching to the low-power mode is satisfied.

11. The method of claim 10, further comprising expanding a period of a discovery window of the NAN communication to a designated size, based on the termination of the USD.

12. The method of claim 9, further comprising:
identifying an operation state of the NAN communication of the external electronic device in a state where the NAN communication is switched to the low-power mode;
identifying whether a condition related to switching to an active mode is satisfied, based on the operation state of the NAN communication of the external electronic device; and
switching the NAN communication to the active mode, based on determination that the condition related to switching to the active mode is satisfied.

13. The method of claim 12, wherein the switching of the NAN communication to the active mode comprises activating unsynchronized service discovery (USD), based on the determination that the condition related to switching to the active mode is satisfied.

14. The method of any one of claims 12 and 13, further comprising:
establishing a NAN data link with the external electronic device in case that the NAN communication is switched to the active mode; and
performing at least one of transmission or reception of at least one of a signal or data to or from the external electronic device through the NAN data link.

15. **16.** The method of claim 9, wherein the identifying of whether the condition related to switching to the low-power mode is satisfied comprises:
in case that the electronic device 101 is determined to be capable of the NAN communication with the external electronic device, based on the operation state of the NAN communication of the external electronic device, determining that the condition related to switching to the low-power mode is not satisfied; and
in case that the electronic device 101 is determined to be restrained from the NAN communication with the external electronic device, based on the operation state of the NAN communication of the external electronic device, determining that the condition related to switching to the low-power mode is satisfied.
